# EUROPEAN PATENT APPLICATION

(11) **EP 4 746 423 A1**
(43) Date of publication of application: **20.05.2026**
(21) Application number: 24909803.9
(22) Date of filing: 09.08.2024
(51) Int. Cl.: H04N 21/431

(54) **VIDEO PLAYBACK METHOD, ELECTRONIC DEVICE, STORAGE MEDIUM AND CHIP**

(30) Priority: 29.12.2023 CN 202311869870
(71) Applicant: Honor Device Co., Ltd., Shenzhen, Guangdong 518040 (CN)
(72) Inventor: LI, Haojie, Shenzhen, Guangdong 518040 (CN); XIAO, Ping, Shenzhen, Guangdong 518040 (CN)
(74) Representative: MERH-IP Matias Erny Reichl Hoffmann Patentanwälte PartG mbB
(86) International application number: PCT/CN2024/111205
(87) International publication number: WO 2025/138851

(57) **Abstract**

This application provides a video play method, an electronic device, a storage medium, and a chip, and relates to the field of terminal device technologies. In the method, at least two decoders may be created specially for a frame play scenario. In the frame play scenario, a currently to-be-displayed video frame is decoded by using a decoder in an idle state, to improve a decoding speed of the video frame. After the decoding speed of the video frame is improved, the video frame is played relatively smoothly. The method can improve smoothness of video pictures in the frame play scenario.

## Description

This application claims priority to Chinese Patent Application No. 202311869870.8, filed with the China National Intellectual Property Administration on December 29, 2023 and entitled "VIDEO PLAY METHOD, ELECTRONIC DEVICE, STORAGE MEDIUM, AND CHIP", which is incorporated herein by reference in its entirety.

### TECHNICAL FIELD

This application relates to the field of terminal device technologies, and in particular, to a video play method, an electronic device, a storage medium, and a chip.

### BACKGROUND

A gallery application in an electronic device may provide a picture preview interface, and a user may view, via the picture preview interface of the gallery application, various pictures stored in the electronic device. The gallery application further provides a video play interface, and the user may play, via the video play interface of the gallery application, various videos stored in the electronic device.

The video play interface may further display a play progress of a video, for example, may display the play progress of the video in a manner such as a progress bar, a progress ring, or a progress display frame. A drag operation of the user on the progress bar, the progress ring, or the progress display frame may trigger frame play of the video by the electronic device. However, in a frame play scenario of the video, a display process of video pictures is relatively choppy and unsmooth.

### SUMMARY

This application provides a video play method, an electronic device, a storage medium, and a chip to reduce video picture stuttering in a frame play scenario of a video and improve video picture smoothness in the frame play scenario.

To achieve the foregoing objective, the following technical solution is used in a first aspect of this application.

The first aspect of this application provides a video play method, applied to an electronic device. The method includes:
displaying a first interface, where the first interface includes a first area and a first control, and the first area includes a first video frame in a first video; and
in a case that a drag operation on the first control is received,
in response to the drag operation, moving the first control from a first position to a second position along a first trajectory; and
in a processing of moving the first control from the first position to the second position along the first trajectory, decoding a first segment of video frames in the first video by using a first decoder, decoding a second segment of video frames in the first video by using a second decoder, displaying a video frame in the first segment of decoded video frames in the first area, and displaying a video frame in the second segment of decoded video frames in the first area, where the first segment of video frames and the second segment of video frames are two consecutive segments of video frames in the first video.

When a video frame in a segment of video frames is displayed by performing the drag operation on the first control, each video frame in the segment of video frames needs to be decoded regardless of whether one video frame or a plurality of video frames in the segment of video frames are displayed. Therefore, decoding efficiency is low. Besides, when a next segment of video frames in two consecutive segments of video frames need to be displayed, a decoder is still decoding a video frame in the first segment of video frames. Consequently, a video frame in the next segment of video frames cannot be decoded and displayed in time. As a result, a play process is relatively choppy. In this application, at least two decoders are disposed in a process of displaying video frames via the drag operation on the first control. The two segments of video frames are decoded by using different decoders. In this way, even if the first decoder has not finished decoding the first segment of video frames, in-time decoding and display by the second decoder on the second segment of video frames are not affected, thereby improving smoothness of video pictures in the frame play scenario.

In another implementation of the first aspect, a play control is further displayed on the first video frame on the first interface. The method further includes:
in a case that an operation performed on the play control is received,
in response to the operation performed on the play control, decoding a video frame in the first video by using a third decoder, and displaying the decoded video frame in the first video in the first area; and
in a process of displaying a third segment of decoded video frames in the first video in the first area, moving the first control from the first position to the second position along the first trajectory, where the third segment of video frames include the first segment of video frames and the second segment of video frames.

This embodiment of this application further provides the third decoder performing play by using the play control. The third decoder is used in a normal play scenario, so that the normal play process and a frame play process are independent of each other and do not interfere with each other, that is, introduction of the frame play process does not require a change to an original normal play procedure, and a development process is easy.

Certainly, in actual application, the third decoder and the first decoder may alternatively be a same decoder, or the third decoder and the second decoder may alternatively be a same decoder.

In another implementation of the first aspect, the displaying a video frame in the first segment of decoded video frames in the first area, and the displaying a video frame in the second segment of decoded video frames in the first area are specifically:
displaying the video frame in the second segment of decoded video frames in the first area after displaying the video frame in the first segment of decoded video frames.

In a process of dragging the first control, a display sequence of the video frame in the first segment of video frames and the video frame in the second segment of video frames is related to the dragging process. The video frame in the first segment of decoded video frames is displayed first in a case that a position passed first corresponds to the video frame in the first segment of video frames. The drag position is related to the displayed video frame.

In another implementation of the first aspect, the method further includes:
in response to the drag operation, continuing to move the first control from the second position to a third position; and
in a process of moving the first control from the second position to the third position, decoding a fourth segment of video frames in the first video by using the first decoder, and displaying a video frame in the fourth segment of decoded video frames in the first area, where the fourth segment of video frames and the second segment of video frames are two consecutive segments of video frames in the first video.

In this application, when the second segment of video frames are decoded by using the second decoder, the third segment of video frames consecutive to the second segment of video frames are decoded by using the first decoder. The two segments of consecutive video frames are decoded by using different decoders. In this way, even if the second decoder has not finished decoding the second segment of video frames, in-time decoding and display by the first decoder on the third segment of video frames are not affected, thereby improving the smoothness of the video pictures in the frame play scenario.

In another implementation of the first aspect, the decoding the first segment of video frames in the first video by using the first decoder includes:
in a case that a state of the first decoder is an idle state, decoding the first segment of video frames in the first video by using the first decoder.

In this application, a decoder used for decoding may be determined based on a state of the decoder. If an idle decoder is used for decoding, the decoding efficiency can be improved, thereby improving smoothness of pictures during frame play.

In another implementation of the first aspect, decoding the first segment of video frames in the first video by using the first decoder in a case that a state of the first decoder is an idle state includes:
obtaining the state of the first decoder;
determining that the state of the first decoder is the idle state; and
decoding the first segment of video frames in the first video by using the first decoder in the idle state.

In another implementation of the first aspect, the decoding a second segment of video frames in the first video by using a second decoder includes:
decoding the second segment of video frames in the first video by using the second decoder in the idle state in a case that the state of the first decoder is a use state and a state of the second decoder is the idle state.

In this application, in a case that the first decoder is not idle, if the second decoder is in the idle state, decoding is performed by using the second idle decoder, so that the decoding efficiency can be improved, thereby improving the smoothness of pictures during frame play.

In another implementation of the first aspect, the decoding the second segment of video frames in the first video by using the second decoder in the idle state in a case that the state of the first decoder is a use state and a state of the second decoder is the idle state includes:
obtaining the state of the first decoder;
determining that the state of the first decoder is the use state;
obtaining the state of the second decoder in a case that it is determined that the state of the first decoder is the use state;
determining that the state of the second decoder is the idle state; and
decoding the second segment of video frames in the first video by using the second decoder in the idle state.

In another implementation of the first aspect, in the process of moving the first control from the first position to the second position along the first trajectory, the method further includes:
displaying a second video frame in the first video in the first area when the first control is moved to a fourth position, where a video frame corresponding to a play progress of the first video is the second video frame when the first control is at the fourth position, and the fourth position is on the first trajectory and is between the first position and the second position.

In this application, in the frame play scenario, a position at which the first control is located is detected, and a video frame related to the position is displayed, so that the displayed video frame is displayed with a drag operation of a user, thereby helping the user view video frames at different moments, and improving user experience.

In another implementation of the first aspect, the first interface further includes a first indicator, and the first indicator is located above the first control and a position on a screen remains unchanged; and a video frame corresponding to a play progress indicated by the position of the first indicator on the first control is the second video frame when the first control is at the fourth position, and a position of the first control is a position of a point on the first control.

In another implementation of the first aspect, the play progress of the first video is a first moment when the first control is at the fourth position, and the displaying a second video frame in the first video in the first area when the first control is moved to a fourth position includes:
when the first control is moved to the fourth position, parsing the first video to obtain the first segment of video frames on which the first moment is located;
sequentially decoding video frames in the first segment of video frames in a decoding sequence of the video frames in the first segment of video frames by using the first decoder; and
displaying the second video frame in the first area after the second video frame that is in the first segment of video frames and that corresponds to a second moment is decoded.

In this application, when a video frame corresponding to a moment needs to be displayed, each video frame in a segment of video frames in which the video frame corresponding to the moment is located needs to be decoded by using a decoder. Certainly, the video frame corresponding to the moment can be displayed after the video frame corresponding to the moment is decoded. If the segment of video frames further includes an undecoded video frame, another undecoded video frame in the segment of video frames may continue to be decoded.

In another implementation of the first aspect, in the process of moving the first control from the first position to the second position along the first trajectory, the method further includes:
when the first control is moved from the fourth position to a fifth position, determining that the play progress of the first video is a second moment, where the fifth position is on the first trajectory and is between the fourth position and the second position;
if a video frame corresponding to the second moment is in the first segment of video frames, obtaining, from the first decoder, a third video frame corresponding to the second moment; and
displaying the third video frame in the first area after the third video frame is obtained from the first decoder.

In this application, if a video frame of a play moment corresponding to a currently detected position and a video frame of a play moment corresponding to a detected previous position are in a same segment of video frames, because an entire segment of video frames are decoded by using a decoder when the video frame of the play moment corresponding to the previous position is displayed, the video frame of the play moment corresponding to the currently detected position may be obtained directly from the corresponding decoder. A process without decoding and display is faster and smoother.

In another implementation of the first aspect, in the process of moving the first control from the first position to the second position along the first trajectory, the method further includes:
when the first control is moved from the fourth position to a sixth position, determining that the play progress of the first video is a third moment, where the sixth position is on the first trajectory and is between the fourth position and the second position;
if a fourth video frame corresponding to the third moment is not in the first segment of video frames, parsing the first video to obtain the second segment of video frames on which the fourth video frame corresponding to the third moment is located;
sequentially decoding video frames in the second segment of video frames in a decoding sequence of the video frames in the second segment of video frames by using the second decoder; and
displaying the fourth video frame in the first area after the fourth video frame in the second segment of video frames is decoded.

If the video frame of the play moment corresponding to the currently detected position and the video frame of the play moment corresponding to the previous position are not in a same segment of video frames, the video frame of the play moment corresponding to the currently detected position needs to be decoded by using another idle decoder. Similarly, each video frame in a segment of video frames in which the video frame is located needs to decoded to improve the decoding efficiency.

In another implementation of the first aspect, video frames in the first video include a plurality of I frames, there are at least one P frame and at least one B frame between any two I frames, the first segment of video frames include an i^{th} I frame and a P frame and a B frame between the i^{th} I frame and an (i+1)^{th} I frame, the second segment of time frames include the (i+1)^{th} I frame and a P frame and a B frame between the (i+1)^{th} I frame and an (i+2)^{th} I frame, a timestamp of the i^{th} I frame is less than a timestamp of the (i+1)^{th} I frame, the timestamp of the (i+1)^{th} I frame is less than a timestamp of the (i+2)^{th} I frame, and i is a natural number greater than or equal to 1.

In another implementation of the first aspect, the first interface further includes a second area, and the first control is located in the second area and can be moved in the second area; and
the first area and the second area do not overlap, or the second area is in the first area.

In another implementation of the first aspect, the displaying a video frame in the first segment of decoded video frames in the first area is specifically:
displaying some or all video frames in the first segment of decoded video frames in the first area.

The displaying a video frame in the second segment of decoded video frames in the first area is specifically:
displaying some or all video frames in the second segment of decoded video frames in the first area.

The displaying the decoded video frame in the first video in the first area specifically includes:
displaying some or all decoded video frames in the first video in the first area.

According to a second aspect, an electronic device is provided, including a processor. The processor is configured to invoke a computer program stored in a memory to implement the method according to any one of the implementations of the first aspect of this application.

According to a third aspect, a chip is provided, including a processor. The processor is coupled to a memory. The processor executes a computer program stored in the memory, so that an electronic device implements the method according to any one of the implementations of the first aspect of this application.

According to a fourth aspect, a computer-readable storage medium is provided. The computer-readable storage medium stores a computer program. When computer instructions are run on an electronic device, the electronic device is enabled to implement the method according to any one of the implementations of the first aspect of this application.

According to a fifth aspect, an embodiment of this application provides a computer program product. When the computer program product runs on a device, the electronic device is enabled to perform the method according to any one of the implementations of the first aspect of this application.

It may be understood that for beneficial effects of the second aspect to the fifth aspect, refer to the related descriptions in the first aspect. Details are not described herein again.

### BRIEF DESCRIPTION OF DRAWINGS

FIG. 1 is a diagram of a hardware structure of an electronic device according to an embodiment of this application;
FIG. 2 is a diagram of interfaces of a video play process according to an embodiment of this application;
FIG. 3 is a diagram of video play interfaces according to an embodiment of this application;
FIG. 4 is a diagram of interfaces of another video play process according to an embodiment of this application;
FIG. 5 is a diagram of a video play architecture according to an embodiment of this application;
FIG. 6 is a sequence diagram of preparation work before normal play and frame play are performed according to an embodiment of this application;
FIG. 7 is a diagram of video frames in a video frame group according to an embodiment of this application;
FIG. 8 is a sequence diagram of a normal play process of a video according to an embodiment of this application;
FIG. 9A and FIG. 9B are a sequence diagram of a frame play process of a video according to an embodiment of this application;
FIG. 10 is a sequence diagram of another frame play process of a video according to an embodiment of this application;
FIG. 11A and FIG. 11B are a sequence diagram of another frame play process of a video according to an embodiment of this application;
FIG. 12 is a sequence diagram illustrating that frame play ends and normal play continues according to an embodiment of this application;
FIG. 13 is a sequence diagram of preparation work before normal play and frame play are performed in the scenarios shown in FIG. 3 and FIG. 4;
FIG. 14 is a sequence diagram of switching a progress display frame to an extended state in the scenario shown in FIG. 3;
FIG. 15 is a sequence diagram of exiting a video play interface according to an embodiment of this application;
FIG. 16 is a diagram of a drag operation on a progress display frame according to an embodiment of this application;
FIG. 17 is a diagram of a plurality of contact point positions corresponding to a drag operation according to an embodiment of this application; and
FIG. 18 is a diagram of a frame play process corresponding to the drag operation shown in FIG. 16.

### DESCRIPTION OF EMBODIMENTS

In the following descriptions, for description rather than limitation, specific details such as particular system structures and technologies are provided to facilitate thorough understanding of embodiments of this application. However, a person skilled in the art should be aware that this application may be implemented in another embodiment without these specific details.

It should be understood that the term "include" when used in the specification and the appended claims of this application indicates presence of the described feature, entirety, step, operation, element, and/or component, but does not exclude presence or addition of one or more other features, entireties, steps, operations, elements, components, and/or a set thereof.

It should be further understood that in embodiments of this application, "one or more" means one, two, or more than two; and "and/or" describes an association relationship between associated objects and represents that three relationships may exist. For example, A and/or B may represent that only A exists, both A and B exist, and only B exists, where A and B may be singular or plural. The character "/" generally indicates an "or" relationship between associated objects.

In addition, in the descriptions of the specification and the appended claims of this application, the terms such as "first", "second", "third", and "fourth" are used only to distinguish between descriptions, and should not be understood as an indication or implication of relative importance.

Reference to "an embodiment", "some embodiments", or the like described in this specification of this application indicates that one or more embodiments of this application include a specific feature, structure, or characteristic described with reference to this embodiment. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "contain", "have", and their variants all mean "include but are not limited to", unless otherwise specifically emphasized in another manner.

An embodiment of this application provides a video play method. The method may be applied to an electronic device. The electronic device may be a tablet computer, a mobile phone, a wearable device, a notebook computer, an ultra-mobile personal computer (Ultra-mobile personal computer, UMPC), a netbook, a personal digital assistant (personal digital assistant, PDA), or the like. A specific type of the electronic device is not limited in embodiments of this application.

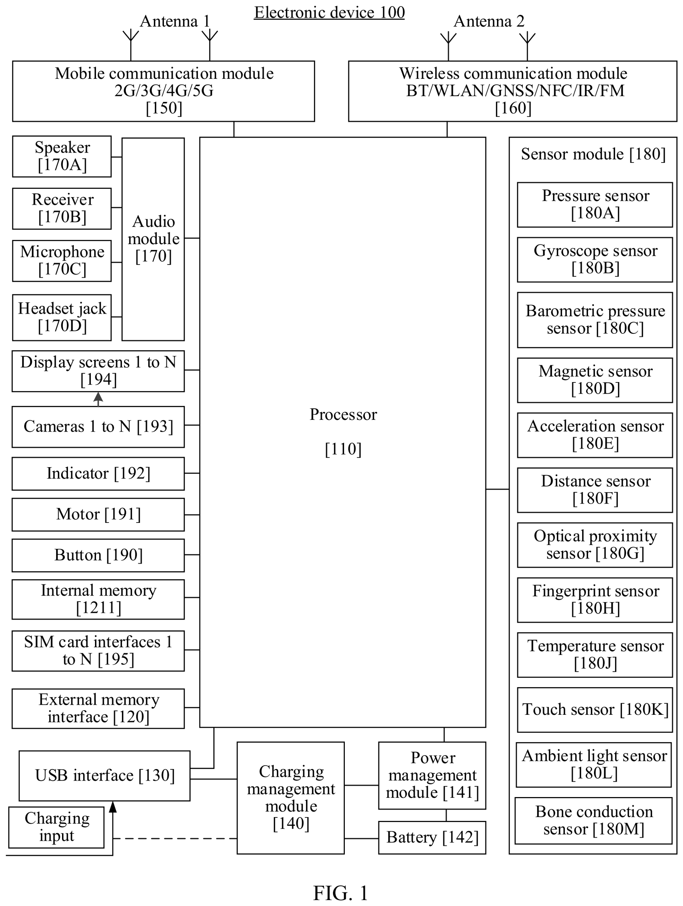

FIG. 1 is a diagram of a structure of an electronic device. The electronic device 100 may include a processor 110, an external memory interface 120, an internal memory 1211, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display screen 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of this application does not constitute a specific limitation on the electronic device 100. In some other embodiments of this application, the electronic device 100 may include more or fewer components than those shown in the figure, or some components may be combined, or some components may be split, or components are arranged in different manners. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent components, or may be integrated into one or more processors. For example, the processor 110 is configured to perform a frame play method of a video in embodiments of this application.

A memory may be further disposed in the processor 110, and is configured to store instructions and data. In some embodiments, the memory in the processor 110 is a cache memory. The memory may store instructions or data recently used or cyclically used by the processor 110. If the processor 110 needs to use the instructions or data again, the processor 110 may directly invoke the instructions or data from the memory. This avoids repeated access, and reduces a waiting time of the processor 110, so that system efficiency is improved.

The internal memory 1211 may be configured to store computer-executable program code, and the executable program code includes instructions. The processor 110 runs the instructions stored in the internal memory 1211, to perform various functional applications and data processing of the electronic device 100. The internal memory 1211 may include a program storage area and a data storage area. The program storage area may store an operating system and an application program required by at least one function (for example, an image play function). The touch sensor 180K is also referred to as a "touch panel". The touch sensor 180K may be disposed on the display screen 194, and the touch sensor 180K and the display screen 194 form a touchscreen, which is also referred to as a "touch screen". The touch sensor 180K is configured to detect a touch operation performed on or near the touch sensor. The touch sensor may transfer the detected touch operation to the application processor to determine a touch event type. A visual output related to the touch operation may be provided through the display screen 194. In some other embodiments, the touch sensor 180K may alternatively be disposed on a surface of the electronic device 100 at a position different from that of the display screen 194. For example, a tap operation on a control, a drag operation on a progress display frame, and the like that are provided in embodiments of this application can all be recognized by a touch sensor.

The electronic device 100 implements a display function by using the GPU, the display screen 194, the application processor, and the like. The GPU is a microprocessor for image processing, and is connected to the display screen 194 and the application processor. The GPU is configured to perform mathematical and geometric calculation for graphic rendering. The processor 110 may include one or more GPUs, which execute program instructions to generate or change display information. For example, a process of rendering YUV data in embodiments of this application may be implemented by using the GPU.

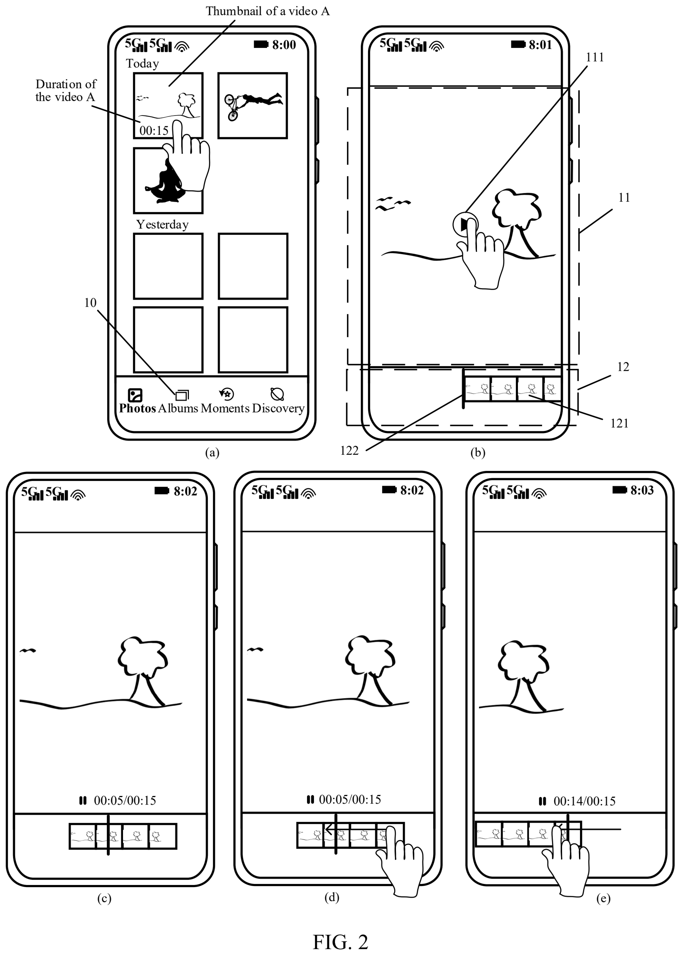

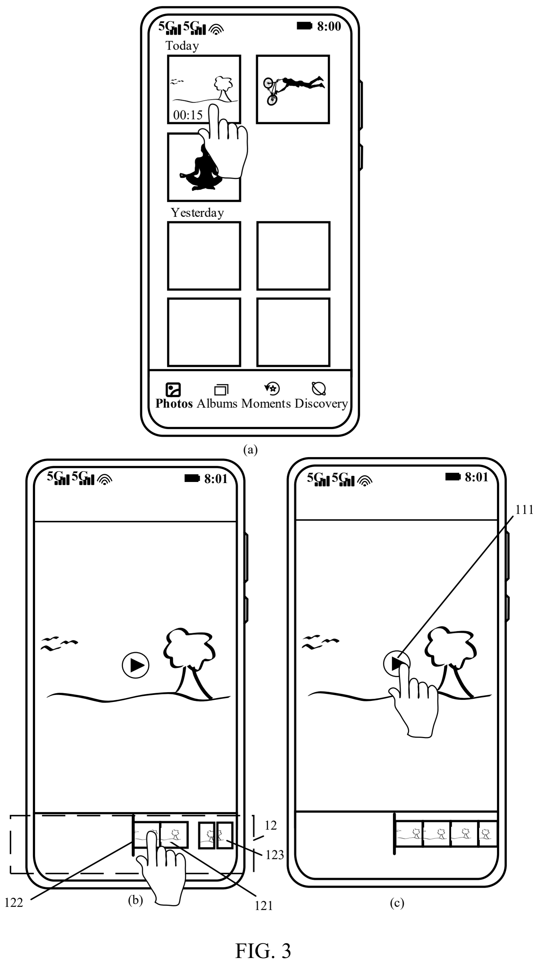

The display screen 194 is configured to display an image, a video, and the like. The display screen 194 may include a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the electronic device 100 may include 1 or N display screens 194, where N is a positive integer greater than 1. For example, the interfaces shown in FIG. 2 or FIG. 3 in embodiments of this application are all displayed by a display.

The video codec is configured to compress or decompress a digital video. The electronic device 100 can support one or more types of video codecs. In this way, the electronic device 100 may play or record videos in a plurality of coding formats. For example, the video codec may decode video frames in an H.264 format provided in embodiments of this application, or re-encode video frames into video frames that are all key frames in an H.264 format.

A specific structure of an execution body of a video play method is not specially limited in embodiments of this application, provided that code recording the video play method provided in embodiments of this application can be run to perform communication according to the video play method provided in embodiments of this application. For example, the execution body of the video play method provided in embodiments of this application may be a functional module that is in an electronic device and that can invoke a program and execute the program, or may be a communication apparatus, for example, a chip, used in an electronic device.

Through a gallery application in the electronic device, a user may view various pictures stored in the electronic device and play various videos stored in the electronic device.

FIG. 2 is a diagram of interfaces of playing, via a gallery application, a video stored in an electronic device according to an embodiment of this application.

(a) in FIG. 2 shows a grid view, displayed by the gallery application in the electronic device, of pictures and videos stored in the electronic device. The grid view may display the pictures and the videos. A grid in which a video is located displays a thumbnail of the video and duration of the video. A grid in which a picture is located displays a thumbnail of the picture.

The grid view may be an interface image displayed by the gallery application after a user opens the gallery application by tapping an icon of the gallery application on a system desktop, or may be an interface image that the gallery application is triggered to display through more steps of operations after a user opens the gallery application by tapping an icon of the gallery application on a system desktop.

The grid view may display, in a plurality of manners, the pictures and/or the videos stored in the electronic device. In a manner shown in (a) in FIG. 2, the pictures and the videos in a photo group are displayed in reverse chronological order. In actual application, the gallery application may set a plurality of object groups. For example, a plurality of groups in an album may be viewed by using a control 10 shown in (a) in FIG. 2: an image group, a video group, a screenshot and screen recording group, and the like. The user may present a picture through the image group in the gallery application, may present a video through a video group in the gallery application, and may present a screenshot picture, a screen recording video, or the like through the screenshot and screen recording group in the gallery application. Each group may also display a corresponding picture and/or video in the foregoing manner of displaying the grid view.

A quantity of user operations that need to be performed from the system desktop to displaying the grid view of the gallery application is not limited in embodiments of this application. Similarly, a manner for displaying the pictures and videos by the grid view is not limited either.

(b) in FIG. 2 shows a video play interface of a video A displayed by the electronic device in response to an operation of tapping, by the user, a thumbnail of the video A in the grid view shown in (a) in FIG. 2. The video play interface includes a video play area 11 and a progress display area 12.

The video play area 11 is configured to display a video picture in a video play process. After the video play interface is entered from a grid view interface, the video play area displays a control 111. The user taps the control 111. In response to the tap operation on the control 111, the electronic device starts to play a picture of the video in the video play area 11 from the 0^{th} second. When the video is in a paused state, the control 111 is also displayed in the video play area 11. The user may tap the control 111. In response to the tap operation on the control 111, the electronic device starts to play a picture of the video in the video play area 11 from a currently paused moment.

The progress display area 12 is configured to display a video play progress. The progress display area 12 includes a progress display frame 121 and a progress indication line 122. A position of the progress indication line 122 may remain unchanged. The user may drag the progress display frame 121 under the progress indication line 122, so that the progress display frame 121 can be moved left or right in a case that the progress indication line 122 is not moved. A position of the progress indication line 122 above the progress display frame on the progress display frame indicates the current play progress of the video.

In an example, total play duration of a current video is 15 seconds, and a total length of a progress display frame of the current video is a length indicated by L pixels. Play duration corresponding to a unit length (or a length corresponding to a unit time) may be obtained based on the two parameters. For example, the play duration 15 is divided by the total length L. Therefore, if it is set that a leftmost edge position (a position corresponding to the 1^{st} pixel) of the progress display frame corresponds to the 0^{th} second of the video, different positions of the progress indication line on the progress display frame correspond to different play moments. For example, if a distance between the position of the progress indication line on the progress display frame and the leftmost edge position of the progress display frame is X, a play moment corresponding to the progress indication line is X* 15/L.

For ease of subsequent description, a manner corresponding to "the moment corresponding to the progress indication line" is used for description in embodiments of this application.

Limited by the space of the progress display area 12, the progress display area 12 may display some video frames or a part of area of some video frames in the progress display frame 121. As shown in (b) in FIG. 2, the progress display frame 121 displayed in the progress display area 12 includes three complete thumbnails of video frames and a part of area of a thumbnail of a video frame.

Usually, a picture played in the video play area 11 is a picture of a video frame corresponding to a moment corresponding to the progress indication line 122 in the progress display area 12.

During specific implementation, a case exists. The moment corresponding to the progress indication line 122 is a moment between play moments corresponding to two adjacent video frames, in other words, the video frame of the moment corresponding to the progress indication line 122 does not exist in a video file.

In an example, in video frames arranged in ascending order of play moments (denoted as timestamps), a play moment of an i^{th} video frame is ti, and a play moment of an (i+1)^{th} video frame is t(i+1). A moment t corresponding to the progress indication line 122 is greater than ti and less than t(i+1). In this case, a video frame corresponding to a timestamp with a shortest time interval with the moment t corresponding to the progress indication line 122 may be used as the video frame of the moment corresponding to the progress indication line 122.

Certainly, in actual application, if the video frame whose timestamp is the same as the moment corresponding to the progress indication line does not exist in the video file, a previous video frame (a video frame corresponding to ti) of the moment t corresponding to the progress indication line 122 may alternatively be used as the video frame of the moment corresponding to the progress indication line 122, or a next video frame (a video frame corresponding to t(i+1)) of the moment t corresponding to the progress indication line 122 may be used as the video frame of the moment corresponding to the progress indication line 122. In actual application, the progress display area 12 may display the play progress in many manners, for example, may display the video play progress in a manner of a progress bar, or may display the video play progress in a manner of a progress ring. This application provides two play manners, namely, normal play and frame play, for video play. In embodiments of this application, the progress display area shown in (b) in FIG. 2 is only used as an example to describe a difference between the normal play and the frame play.

(c) in FIG. 2 shows an interface image in a process of playing the video A by the electronic device in response to the operation, performed by the user, of tapping the control 111 (where the control may also be denoted as a play control) in the interface shown in (b) in FIG. 2. The interface image indicates that the video A has been played to the 5^{th} second, and a video picture corresponding to the 5^{th} second is displayed in the video play area 11. At the same time, the progress display frame 121 in the progress display area 12 moves, so that the moment corresponding to the progress indication line 122 is the 5^{th} second. The play process from (b) in FIG. 2 to (c) in FIG. 2 is the normal play process of the video.

One video file includes a plurality of video frames. Each video frame has a timestamp. The timestamp records a play moment of a video frame in a play process of the video file. In an example, an arrangement of video frames in the video file in ascending order of timestamps is: a video frame 0 (where a timestamp is t0), a video frame 1 (where a timestamp is t1), a video frame 2 (where a timestamp is t2), a video frame 3 (where a timestamp is t3), a video frame 4 (where a timestamp is t4), a video frame 5 (where a timestamp is t5), a video frame 6 (where a timestamp is t6), and a video frame 7 (where a timestamp is t7)... The normal play is: sequentially displaying various video frames in the video play area in ascending order of timestamps based on play moments corresponding to timestamps.

In an example of the normal play process, the video frame 0 is displayed in the video play area 11 at the moment t0 when the play starts, the video frame 1 is displayed in the video play area 11 at the moment t1 after the play starts, the video frame 2 is displayed in the video play area 11 at the moment t2 after the play starts, the video frame 3 is displayed in the video play area 11 at the moment t3 after the play starts, the video frame 4 is displayed in the video play area 11 at the moment t4 after the play starts, the video frame 5 is displayed in the video play area 11 at the moment t5 after the play starts, the video frame 6 is displayed in the video play area 11 at the moment t6 after the play starts, and the video frame 7 is displayed in the video play area 11 at the moment t7 after the play starts...

(b) in FIG. 2 and (c) in FIG. 2 display the normal play process of the video A: sequentially displaying various video frames from the video frame of the 0^{th} second of the video A based on play moments indicated by timestamps. (c) in FIG. 2 is a diagram of an interface of displaying the 5^{th} second of the video frame. Refer to (d) in FIG. 2. The user drags the progress display frame of the interface shown in (c) in FIG. 2.

In response to the drag operation shown in (d) in FIG. 2, the electronic device displays, in the video play area, a picture corresponding to the drag operation.

In an example, as shown in (e) in FIG. 2, when the user drags the progress display frame and a time corresponding to the progress indication line is the 14^{th} second, a video frame corresponding to the 14^{th} second is displayed in the video play area. The video frame corresponding to the 14^{th} second may be a video frame whose timestamp is the 14^{th} second in the video A, or may be a video frame whose timestamp is closest to the 14^{th} second, or may be a video frame whose timestamp has a smallest time interval with the 14^{th} second before the 14^{th} second, or may be a video frame whose timestamp has a smallest time interval with the 14^{th} second after the 14^{th} second.

It should be noted that in a subsequent embodiment, for a specific meaning of a description manner of "a video frame corresponding to a moment", refer to the detailed description of "the video frame corresponding to the 14^{th} second". Details are not described subsequently again. The play process shown in (d) in FIG. 2 to (e) in FIG. 2 is the frame play process of the video.

In the process of dragging the progress display frame 121 by the user, a relative position is formed between the progress indication line 122 and the progress display frame 121. A position of the progress indication line 122 on the progress display frame 121 is related to a moment corresponding to the progress indication line 122.

In a specific implementation process, it is assumed that before the user moves in the area in which the progress display frame 121 of the screen is located, the time indicated by the progress indication line 122 is t1. The user moves left or right in the area in which the progress display frame of the screen is located, and the electronic device may detect a real-time contact point position of the user at a time interval. The electronic device determines a moving direction and a moving distance of the user based on consecutive real-time contact point positions. The electronic device determines a time variation Δt based on the moving distance of the user; and determines, based on the moving direction of the user, a calculation manner for calculating a real-time time t2. For example, if the moving direction is leftward, the start time t1 is subtracted by the time variation Δt to obtain the real-time time t2; and if the moving direction is rightward, the start time t1 is added to the time variation Δt to obtain the real-time time t2. After the real-time time t2 is obtained, the electronic device searches for a video frame corresponding to the real-time time t2, and displays, in the video play area, a video frame corresponding to t2.

According to another aspect, the electronic device obtains a moving direction of the progress display frame based on the moving direction determined based on the real-time contact point position, and determines a moving distance of the progress display frame based on the moving distance of the real-time contact point position. The electronic device moves the progress display frame in the progress display area based on the moving direction and the moving distance of the progress display frame, so that the time corresponding to the progress indication line is t2. In another example, the electronic device also determines the moving direction and the moving distance of the progress display frame based on the start time t1 and the real-time time t2 (where if t2 is greater than t1, the moving direction is leftward; and if t2 is less than t1, the moving direction is rightward). The electronic device moves the progress display frame in the progress display area based on the moving direction and the moving distance of the progress display frame, so that the time corresponding to the progress indication line is t2.

It should be noted that the foregoing process is merely an example. In actual application, there may be a plurality of manners for determining the time corresponding to the progress indication line 122, the position of the progress display frame 121, and the video frame displayed in the video play area 11 in the process of dragging the progress display frame 121 by the user.

It may be understood based on the foregoing frame play process that the process of dragging the progress display frame by the user is an uncertain process, it may be leftward or rightward, and the dragging may be relatively fast or relatively slow. Correspondingly, a video frame picture displayed in the video play area 11 is random.

In an example, before the user moves in the area in which the progress display frame of the screen is located, the start time indicated by the progress indication line is t1. In the process of dragging the progress display frame by the user, the electronic device detects the real-time contact point position of the user at a time interval to obtain real-time times t2, t3, t7, t4, and t3 that respectively correspond to a plurality of consecutive time periodicities. Video frames are sequentially played in the video play area in the following sequence: sequentially playing the video frame corresponding to the moment t2, the video frame corresponding to the moment t3, the video frame corresponding to the moment t7, the video frame corresponding to the moment t4, and the video frame corresponding to the moment t3 by using the video frame corresponding to the moment t1 as the start video frame. It may be understood that the process, triggered by the user by tapping the control 11, in which the electronic device plays the video in the video play area is normal play; and the process, triggered by the user by dragging the progress display frame, in which the electronic device displays, in the video play area, the video frame of the moment corresponding to the progress indication line is frame play. In addition, in the normal play process of the video A, if the user releases the progress display frame in the area in which the progress display frame is located after dragging the progress display frame to move, the electronic device continues to play the video A in the normal play manner.

During specific implementation, an embodiment of this application further provides another diagram of an interface of playing, via the gallery application, a video stored in the electronic device.

An embodiment of this application provides a video recording mode: Magic Take. When a video is recorded, a photo (for example, a photo automatically captured by the electronic device based on picture content, or a photo manually taken by the user by using a photographing control on a video recording interface) may be simultaneously generated to obtain the photo captured in the video recording process. The recorded video may be associated with the photo captured in the video recording process. Similarly, when the video is viewed via the gallery application, in the video play interface, the photo captured in the video recording process may further be displayed in the progress display area.

Refer to (a) in FIG. 3. For the interface, refer to the descriptions of (a) in FIG. 2.

(b) in FIG. 3 shows a video play interface of the video A displayed by the electronic device in response to the operation of tapping, by the user, the thumbnail of the video A in the grid view shown in (a) in FIG. 3. The video play interface is similar to the video play interface shown in FIG. 2, and a difference lies in content displayed in the progress display area 12.

The progress display frame 121 of the progress display area 12 is in a compressed state. The progress display frame in the compressed state may display two video frames, three video frames, or the like. Refer to (b) in FIG. 2. The progress display frame 121 in the compressed state includes a thumbnail of a first frame and a thumbnail of a middle frame in the video. Certainly, in actual application, a thumbnail of another frame in the video may also be displayed, for example, the thumbnail of the first frame and a thumbnail of a last frame. A thumbnail 123 of the photo obtained in the video recording process is displayed on the right side of the progress display frame 121.

The user may perform an operation (for example, an operation such as tapping or double tapping) above the progress display frame to trigger the progress display frame to switch from the compressed state to an extended state. A progress display frame in the extended state may include thumbnails of more video frames compared with the progress display frame in the compressed state. A quantity of video frames displayed on the progress display frame in the extended state is related to duration of a video. For example, longer duration of the video indicates a larger quantity of video frames included in the progress display frame.

(c) in FIG. 3 is a diagram of the progress display frame in the extended state displayed by the electronic device in response to the operation, performed by the user, of tapping the progress display frame 121 in the compressed state shown in (b) in FIG. 3. Limited by the space, after the progress display frame is extended, the photo obtained in the video recording process is hidden.

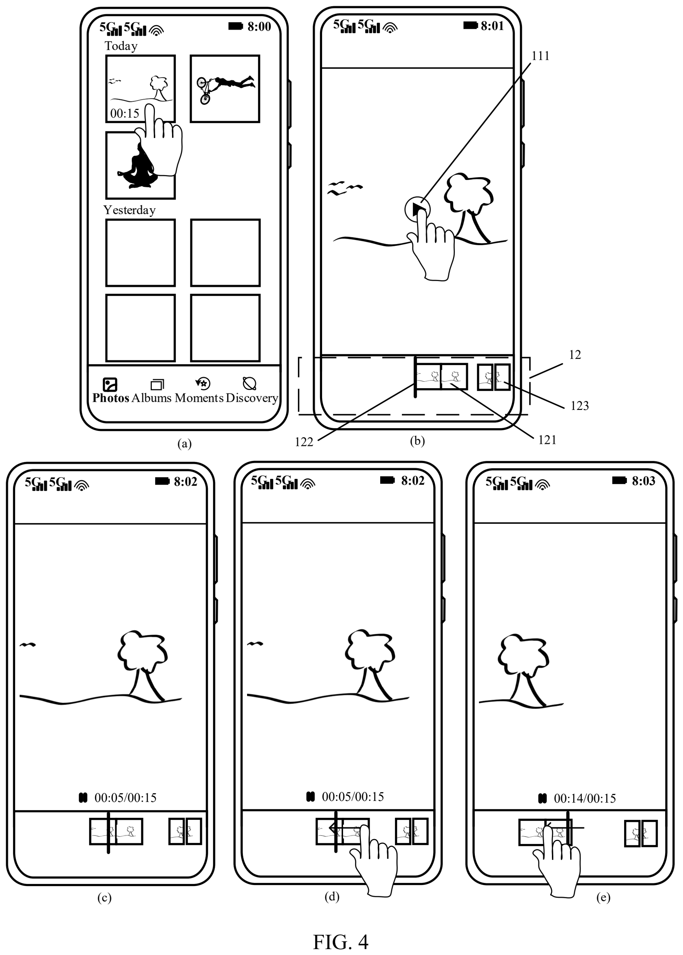

The interface shown in (c) in FIG. 3 is the same as the interface shown in (b) in FIG. 2. Therefore, for the normal play process and the frame play process based on the interface shown in (c) in FIG. 3, refer to the descriptions in (b) in FIG. 2 to (e) in FIG. 2. Details are not described herein again. FIG. 4 is another diagram of interfaces of playing, via a gallery application, a video stored in an electronic device according to an embodiment of this application.

For (a) in FIG. 4 and (b) in FIG. 4, refer to the descriptions in (a) in FIG. 3 and (b) in FIG. 3.

In an interface shown in (b) in FIG. 4, a progress display frame is in a compressed state. A user taps a control 111 in an interface shown in (b) in FIG. 4, to trigger the electronic device to play a video A in a normal play manner.

(c) in FIG. 4 shows an interface image in a process of playing the video A after the user taps the control 111 in the interface shown in (b) in FIG. 4. The interface image corresponds to an interface in a normal play process when the progress display frame is in the compressed state. The interface image indicates that the video A has been played to the 5^{th} second, and a video picture corresponding to the 5^{th} second is displayed in a video play area. At the same time, the progress display frame in the progress display area moves, so that a moment corresponding to a progress indication line is the 5^{th} second. The play process from (b) in FIG. 4 to (c) in FIG. 4 is the normal play process of the video.

Refer to (d) in FIG. 4. The user drags the progress display frame based on the interface shown in (c) in FIG. 4.

Refer to (e) in FIG. 4. In response to the drag operation shown in (d) in FIG. 4, the electronic device displays, in the video play area, a video frame on which a time corresponding to the progress indication line is the 14^{th} second. A play moment corresponding to the progress indication line in the progress display area is the 14^{th} second, and the video frame corresponding to the 14^{th} second is displayed in the video play area.

It should be noted that if the user drags the progress display frame when the progress display frame is in the compressed state, the progress display frame maintains the compressed state. Certainly, the user may alternatively first trigger, through an operation, the progress display frame to change from the compressed state to an extended state as shown in FIG. 3, and then drag the progress display frame in the extended state. In this case, the progress display frame maintains the extended state.

All operations shown in embodiments of this application are examples. In actual application, another operation may further be set based on a specific situation. For example, some tap operations may alternatively be double tap operations, other air gestures, or the like. Some drag operations may alternatively be air gestures or the like. Similarly, examples of some operations in a subsequently embodiment may alternatively be other operations.

Currently, in a normal play scenario, video frames are subsequently displayed in ascending order of timestamps of the video frames. Therefore, parsing, decoding, rendering, and the like may be performed in advance in a sequence of the video frames in the video file. Because parsing, decoding, and rendering are performed in advance, the video is relatively smoothly played in a normal play scenario. In a frame play scenario, as described above, the process of dragging the progress display frame by the user is an uncertain process, it may be leftward or rightward, and the dragging may be relatively fast or relatively slow. Correspondingly, a video frame picture displayed in the video play area 11 is random. Therefore, in the process of dragging the progress display frame by the user, the electronic device needs to determine, based on a contact point position detected in real time, a moment corresponding to the progress indication line, and then performs operations such as parsing, decoding, and rendering on a video frame corresponding to the moment. In a case that a decoding capability of the electronic device is relatively weak, play is usually choppy and unsmooth in the frame play scenario.

With reference to the example in FIG. 2, the process from (b) in FIG. 2 to (c) in FIG. 2 is the normal play scenario, and the video picture displayed in the video play area is relatively smooth; and the process from (d) in FIG. 2 to (e) in FIG. 2 is the frame play scenario, and the video picture displayed in the video play area is relatively choppy and unsmooth.

An embodiment of this application provides a frame play method of a video. An electronic device sets, for a frame play process, at least two decoders independent of a normal play process, and decodes the frame play process by using the at least two set decoders, thereby improving a decoding capability, so that frame play of the video can be performed relatively smoothly.

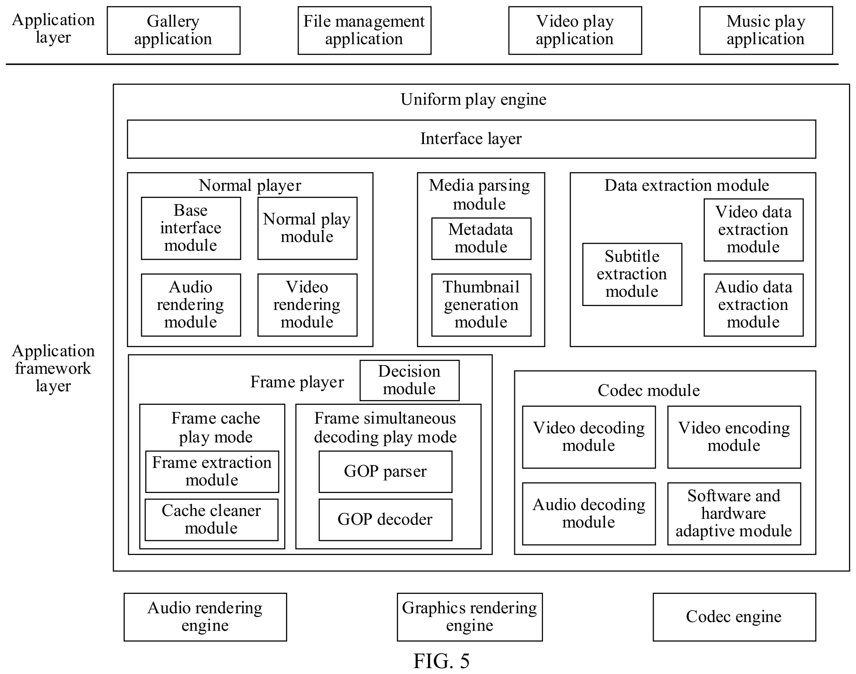

FIG. 5 is a diagram of a technical architecture of a play engine corresponding to a frame play method of a video according to an embodiment of this application.

An application layer of an electronic device includes a plurality of applications, for example, a gallery application, a file management application, a video play application, and an audio application. Only some applications related to audio and video play are listed in this embodiment of this application. Certainly, in actual application, it is possible that only some of the listed applications of the application layer are used. Another application not listed in the application layer may further be used to implement a video play process.

An application framework layer has a base platform. The base platform has a uniform play engine. The uniform play engine is configured to provide a base for an upper layer application to implement audio and video play.

The uniform play engine has an interface layer. The interface layer is configured to transmit data between the upper layer application and another module in the uniform play engine.

A normal player is configured to implement the normal play process described in the foregoing embodiments. The normal player includes: a base interface module, a normal play module, an audio rendering module, and a video rendering module.

The base interface module is configured to provide a base interface of the video play process. The base interface may be used by a video play application without an interface. The gallery application in embodiments of this application may not use the base interface, but to use a video play interface provided by the gallery application.

The audio rendering module is configured to invoke an audio rendering engine to render audio in a video file in the normal play process.

The video rendering module is configured to invoke a graphics rendering engine to render a video in a video file in the normal play process.

The normal play module is configured to play an audio file or a video file and invoke another module (for example, a codec module) to implement the normal play process and the like. In actual application, the audio rendering module and the video rendering module may alternatively be disposed inside the normal play module.

A frame player is configured to implement a frame play process. The frame player provides two play modes: a frame cache play mode and a frame simultaneous decoding play mode.

The frame cache play mode relates to a frame extraction module and a cache cleaner module. The frame extraction module is configured to extract a non-key frame, to re-encode and buffer the extracted non-key frame. The cache cleaner module is configured to clean related information of a cache at proper timing (for example, a like) and the like.

The frame simultaneous decoding play mode relates to a group of pictures (group of pictures, GOP) parser and a GOP decoder, which are configured to parse a video file and decode a video frame.

A decision module may be a module independent of the normal player and the frame player, or may be a module included in the frame player, and is configured to determine whether to perform frame simultaneous decoding play or frame cache play. In embodiments of this application, an example in which the decision module is inside the frame player is used.

A media parsing module includes a metadata module and a thumbnail generation module. The metadata module is configured to parse video duration. The thumbnail generation module is configured to generate a plurality of thumbnails as progress display frames based on the video duration in a Magic Take scenario.

A data extraction module includes a subtitle extraction module, a video data extraction module, and an audio data extraction module. The subtitle extraction module is configured to extract subtitle data of a video file. The video data extraction module is configured to extract video stream data of the video file. The audio data extraction module is configured to extract audio stream data of the video file.

A codec module includes: a video encoding module, a video decoding module, an audio decoding module, and a software and hardware adaptive module.

The video encoding module, the video decoding module, and the audio decoding module may all be invoked by the normal player and the frame player, and the following codec engine and the like are simultaneously invoked to implement corresponding functions.

The software and hardware adaptive module is configured to implement a corresponding function by using a software module in a case that a hardware resource is limited.

The application framework layer further includes an audio rendering engine, a graphics rendering engine, and a codec engine.

The audio rendering engine is configured to be invoked to provide audio rendering. The graphics rendering engine is configured to be invoked to provide picture rendering. The codec engine is configured to be invoked to decode and encode a video frame.

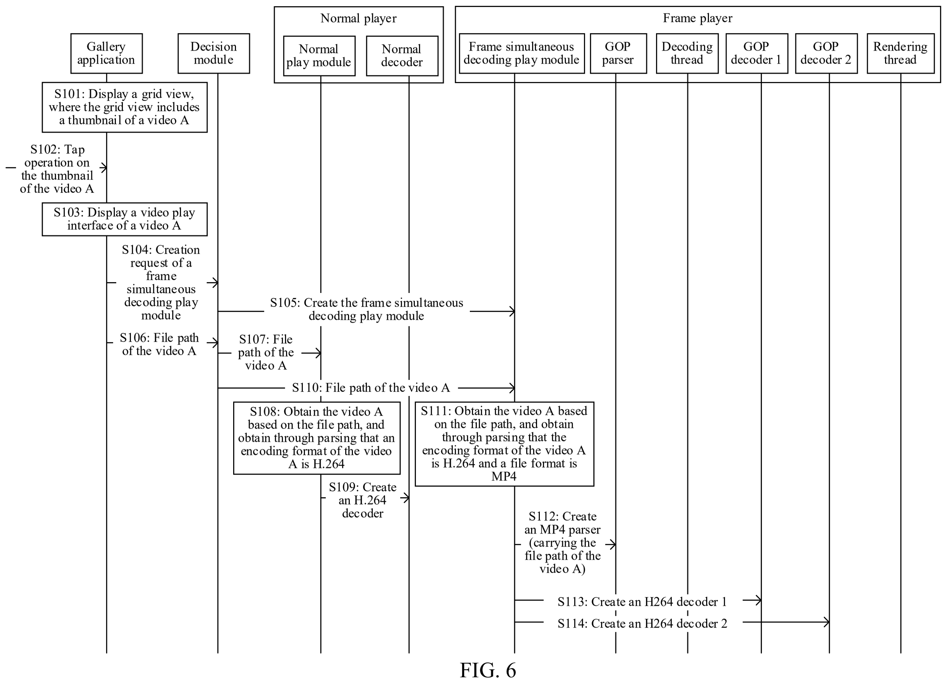

FIG. 6 is a sequence diagram of a preparation work process before an electronic device performs normal play and frame play according to an embodiment of this application. The sequence diagram may correspond to (a) in FIG. 2 and (b) in FIG. 2. Certainly, a video A in this example may be a video corresponding to Magic Take, or may not be a video corresponding to Magic Take.

S101: A gallery application displays a grid view, where the grid view includes a thumbnail of the video A.

The grid view displayed by the gallery application not only may include the thumbnail of the video A, but also may include a thumbnail of another video, and certainly may include a thumbnail of a picture. The grid view displayed by the interface shown in (a) in FIG. 2 may be used as an example of the grid view in this step.

S102: The gallery application receives a tap operation on the thumbnail of the video A.

In this embodiment of this application, when the electronic device displays the interface shown in (a) in FIG. 2, a user taps a thumbnail of any video displayed in the grid view in the interface shown in (a) in FIG. 2. In response to the operation, the electronic device displays a video play interface of the video via the gallery application. For the tap operation, refer to the tap operation of a finger of the user in the interface shown in (a) in FIG. 2.

It should be noted that in actual application, another module of the electronic device may transmit a tap operation to the gallery application after receiving the tap operation. For ease of description, a middle step is omitted in this embodiment of this application, and an example in which the gallery application can receive the tap operation on the thumbnail of the video A is used.

S103: The gallery application displays the video play interface of the video A after receiving the tap operation on the thumbnail of the video A.

For the video play interface of the video A, refer to the interface shown in (b) in FIG. 2. The video play interface of the video A includes a video play area and a progress display area that is configured to display a play progress.

It should be noted that in response to the tap operation, on one hand, the electronic device performs the process of displaying the video play interface of the video A, and on the other hand, performs a process corresponding to a subsequent step. Therefore, there is no strict sequence between step S103 and step S104 (and a subsequent step).

S104: The gallery application sends a creation request of the frame simultaneous decoding play module to the decision module after receiving the tap operation on the thumbnail of the video A.

S105: The decision module creates the frame simultaneous decoding play module in the frame player after receiving the creation request of the frame simultaneous decoding play module.

S106: The gallery application sends a file path of the video A to the decision module after receiving the tap operation on the thumbnail of the video A.

In this embodiment of this application, the gallery application of the electronic device stores file paths of various pictures and various video files in the electronic device. The gallery application may display pictures and play videos based on the file paths of the various pictures and video files.

In this embodiment of this application, step S104 and step S106 may be performed as two independent steps, or may be combined into one step.

After receiving the file path of the video A, on one hand, the decision module sends the file path of the video A to the normal play module, so that the normal play module prepares for normal play of the video A; and on the other hand, sends the file path of the video A to the frame simultaneous decoding play module, so that the frame simultaneous decoding play module prepares for frame play of the video A.

Sending the file path of the video A to the normal play module and subsequent preparation work of the normal play module are described first.

S107: The decision module sends the file path of the video A to the normal play module after receiving the file path of the video A.

S108: After receiving the file path of the video A, the normal play module obtains the video A based on the file path, and obtains an encoding format of the video A through parsing, where an example in which the encoding format of the video A is H.264 is used in this application.

S109: The normal play module creates, based on the encoding format of the video A, an H.264 decoder used for normal play. The decoder is used for normal play, and therefore, may be denoted as a normal decoder, or may be denoted as a third decoder.

Sending the file path of the video A to the frame simultaneous decoding play module and subsequent preparation work of the frame simultaneous decoding play module are described below.

S110: The decision module sends the file path of the video A to the created frame simultaneous decoding play module after receiving the file path of the video A.

S111: After receiving the file path of the video A, the frame simultaneous decoding play module obtains the video A based on the file path, and obtains the encoding format and a file format of the video A through parsing. An example in which the encoding format is H.264 and the file format is MP4 is used in this embodiment of this application.

S112: The frame simultaneous decoding play module creates an MP4 parser based on the parsed file format, and simultaneously sends the file path of the video A to the created parser, where the parser may be denoted as a GOP parser.

S113: The frame simultaneous decoding play module creates a first H.264 decoder based on the parsed encoding format.

S114: The frame simultaneous decoding play module creates a second H.264 decoder based on the parsed encoding format.

For ease of description, the created decoders are denoted as a GOP decoder 1 and a GOP decoder 2. Certainly, in actual application, more decoders may be created to improve a decoding capability of the electronic device. If more decoders used for the frame play are created, the decoders may be denoted as a GOP decoder and the like in sequence.

In this embodiment of this application, one decoder may be obtained through one creation operation, and a plurality of creation operations are performed based on a quantity of to-be-created created decoders; or a plurality of decoders may be created through one creation operation.

In this embodiment of this application, the parser is configured to parse a file in an MP4 format into a video stream, and the decoder is configured to decode the video stream into video pixel information.

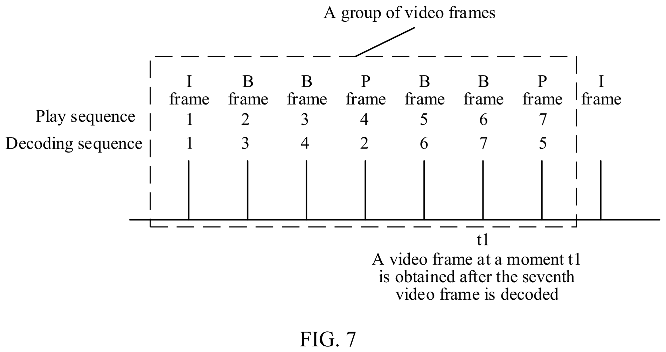

Refer to FIG. 7. The GOP decoder is configured to decode a group of video frames (which may be denoted as a video frame group or a GOP group). Each group of video frames include a first key frame (I frame) and a P frame and a B frame between the first key frame and a next key frame (I frame). That is, each group of video frames may include: an I frame, a B frame, a B frame, a P frame, a B frame, a B frame, and a P frame in a play sequence. The I frame, the P frame, and the B frame are all video frames. When decoding a video frame at a moment, the GOP decoder does not directly decode the video frame at the moment, but decodes a video frame group in which the video frame at the moment is located. A video frame group is decoded one by one in a decoding sequence.

After this step, preparation work for normal play and preparation work for frame play are both completed. The electronic device performs normal play of a video after receiving an operation for the normal play, and performs frame play of the video after receiving an operation for the frame play.

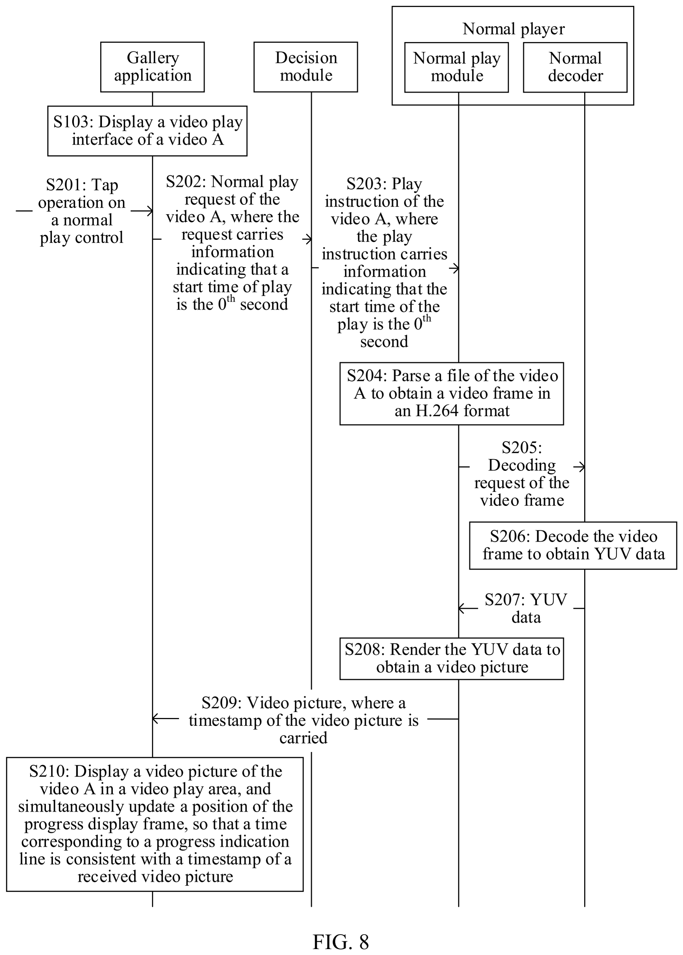

This embodiment of this application corresponds to the play process in the scenario shown in FIG. 2. An example in which the operation for the normal play is received first is used. FIG. 8 is a sequence diagram of a normal play method of a video according to an embodiment of this application. The sequence diagram may correspond to the process from the operation shown in (b) in FIG. 2 to displaying the corresponding interface in (c) in FIG. 2.

S201: A gallery application receives a tap operation on a normal play control.

In this embodiment of this application, when an electronic device displays the video play interface of the video A shown in (b) in FIG. 2, a user taps the normal play control in the video play area shown in (b) in FIG. 2 to trigger the electronic device to perform a normal play procedure of the video A.

S202: The gallery application sends a normal play request of the video A to a decision module after receiving the tap operation on the normal play control, where the request carries information indicating that a start time of normal play is the 0^{th} second.

S203: The decision module sends a play instruction of the video A to a normal play module after receiving the normal play request of the video A, where the play instruction carries the information indicating that the start time of the play is the 0^{th} second.

S204: After receiving the play instruction of the video A, the normal play module parses the video A to obtain a video frame in an H.264 format.

S205: The normal play module sends a decoding request of the video frame to a normal decoder.

In actual application, the normal play module may buffer the video frame in the H.264 format. The decoding request carries a cache address. The normal decoder obtains the video frame in the H.264 format from the cache address for decoding. Certainly, the normal play module may alternatively add the video frame in the H.264 format to the decoding request. The normal decoder decodes the received video frame in the H.264 format. A specific implementation is not limited in this application.

S206: The normal decoder decodes the video frame to obtain decoded video data: YUV data.

The decoded video data is divided into an I frame, a P frame, and a B frame.

S207: The normal decoder sends the decoded YUV data to a normal player.

Similarly, the normal decoder may alternatively buffer the YUV data, and then send an address of the buffered YUV data to the normal player. A specific transmission manner is not limited in this embodiment of this application.

S208: After receiving the decoded YUV data, the normal player renders the YUV data to obtain a video picture.

S209: The normal player sends the video picture obtained through rendering to the gallery application, and a timestamp of the video picture is carried.

S210: After receiving the video picture, the gallery application displays the received video picture in the video play area, and simultaneously updates a position of a progress display frame in the progress display area, so that a moment corresponding to a progress indication line is consistent with a timestamp of the received video picture.

In actual application, the electronic device needs to continuously perform S206 to S210, to display various video frames in the video play interface based on play moments indicated by timestamps of the various video frames in the video file.

(c) in FIG. 2 shows an interface image when the video play interface displayed in the gallery application displays the 4^{th} second after the user taps the normal play control. The normal play process of the video A shown in FIG. 8 does not need be participated by a related module in the frame player. In addition, the normal play module performs operations such as parsing and rendering. Therefore, the normal play module may further include a normal parser and a rendering thread used by the normal player.

As described above, the electronic device further performs preparation work of frame play, and therefore, may further perform frame play on the video A via the gallery application.

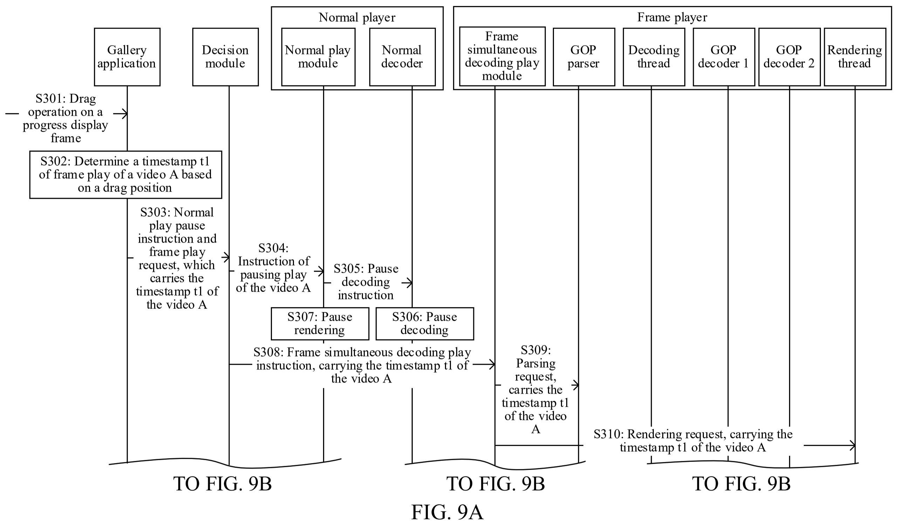

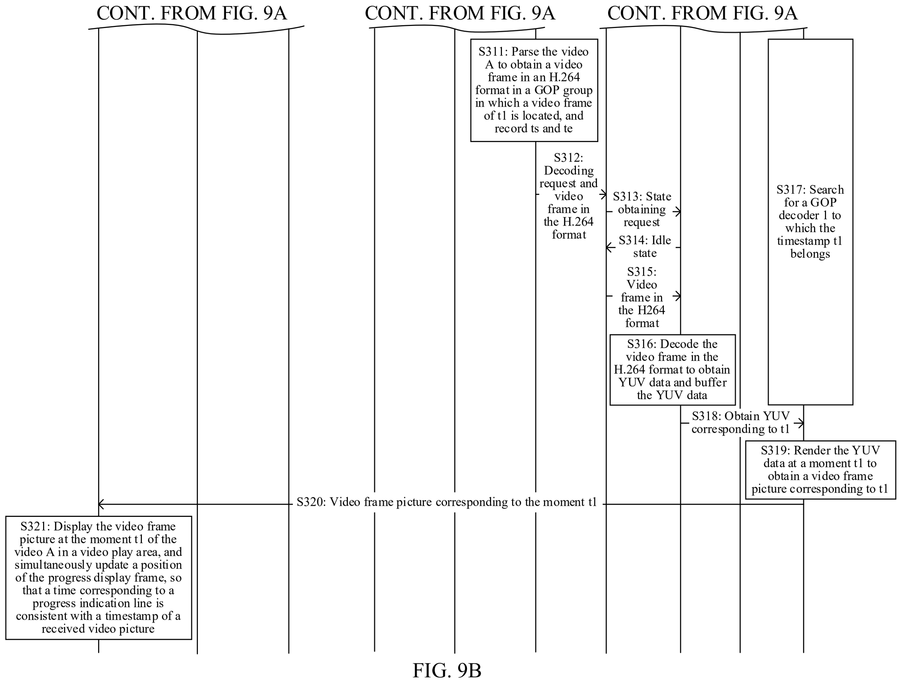

The frame play process of the video A is described in this embodiment of this application by using FIG. 9A and FIG. 9B. The sequence diagram shown in FIG. 9A and FIG. 9B corresponds to the process from (d) in FIG. 2 to (e) in FIG. 2.

The user may drag the progress display frame in the interface shown in (d) in FIG. 2 to switch the video A that is being played in a normal mode into frame play, or may first pause the video A that is being played in the normal mode in the interface shown in (c) in FIG. 2, so that the video A is in a paused state. Then, a video frame in the video A in the paused state continues to be displayed in a frame play mode by dragging the progress display frame. In this embodiment of this application, an example in which the user drags the progress display frame to switch to the frame play mode when the video A is played in the normal mode is used.

S301: A gallery application receives a drag operation on a progress display frame.

For an electronic device including a touchscreen, a touch drive may sample a touch operation of a user based on a periodicity T. The foregoing periodicity is also referred to as a deployment periodicity or a reporting periodicity, and is a periodicity at which the touch drive collects the touch operation of the user.

An example in which the touch drive performs 240 times of collection per second is used. The periodicity T = 1/240 = 4.16 ms, that is, the touch drive collects touch data every 4.16 ms. If the user presses the touchscreen with one or two fingers in a periodicity, the touch drive may determine a touch position of the one or two fingers based on a voltage change or the like.

For example, when the user wants to change, by dragging the position of the progress display frame, the video frame displayed in the video play area, the touch drive receives a tap operation performed by the user on the progress display frame, and transmits a down event to an application processor. The application processor transmits the down event to the gallery application. After the tap event is received, the touch drive continues to receive a continuous drag operation performed by the user on the progress display frame, and transmits a move event to the application processor. The application processor transmits the move event to the gallery application.

S302: The gallery application determines a timestamp t1 of frame play of a video A based on a drag position of the drag operation.

In this embodiment of this application, one continuous drag operation includes: A finger of the user touches the progress display frame (down event), the finger of the user moves (move event), and the finger of the user releases the progress display frame (up event). In the embodiment shown in FIG. 7, the frame play process is described by using an example in which the electronic device detects the drag operation corresponding to the first two contact point positions after the finger of the user touches the progress display frame.

S303: The gallery application sends a normal play pause instruction and a frame play request to a decision module in a case that the video A is played in a normal play mode, where the frame play request carries the timestamp t1 of the video A.

After receiving the normal play pause instruction and the frame play request of the video A, the decision module on one hand needs to pause normal play of the video A, and on the other hand starts frame play of the video A.

S304: After receiving the normal play pause instruction, the decision module sends, to a normal play module, an instruction of pausing play of the video A.

S305: After receiving the instruction of pausing play of the video A, the normal play module sends a pause decoding instruction to a normal decoder.

S306: After receiving the pause decoding instruction, the normal decoder pauses decoding of the video A.

S307: After receiving the instruction of pausing play of the video A, a player pauses rendering of the video A.

S308: The decision module sends a frame simultaneous decoding play instruction to a frame simultaneous decoding play module after receiving the frame play request, where the instruction carries the timestamp t1 of the video A.

S309: The frame simultaneous decoding play module sends a parsing request to a GOP parser after receiving a frame play instruction, where the parsing request carries the timestamp t1 of the video A.

S310: The frame simultaneous decoding play module sends a rendering request to a rendering thread after receiving the frame play instruction, where the rendering request carries the timestamp t1 of the video A.

S311: After receiving the parsing request, the GOP parser parses the video A to obtain a video frame in an H.264 format in a GOP group in which a video frame of the current timestamp t1 is located in the video A, and records a timestamp ts of the first video frame and a timestamp te of the last video frame in the GOP group.

S312: The GOP parser sends a decoding request to a GPO decoding thread.

During specific implementation, the GOP parser may buffer the video frame in the H.264 format obtained through decoding, where the decoding request carries a cache address; or the video frame in the H.264 format obtained through parsing may be directly sent.

S313: A decoding thread sends a state obtaining request to a GOP decoder 1.

S314: The decoding thread receives that a state of the GOP decoder 1 is an idle state.

In this embodiment of this application, if the state of the GOP decoder 1 is the idle state, decoding is performed by using the GOP decoder 1; or if the state of the GOP decoder 1 is not the idle state, it is necessary to check whether another GOP decoder is in the idle state, so that decoding is performed by using a decoder in the idle state. In this way, the video frame is obtained through decoding at a relatively fast speed.

In this example, the decoder 1 is in the idle state.

S315: The decoding thread sends the video frame in the H.264 format or a cache address of the video frame in the H.264 format to the GOP decoder 1 in the idle state.

S316: The GOP decoder 1 decodes the video frame in the H.264 format to obtain YUV data, and buffers the YUV data.

The video frames in the H.264 format that are obtained by the GOP decoder are all video frames in the GOP group in which the video frame of t1 is located, and need to be sequentially decoded in a decoding sequence until all the video frames in the group are decoded. Data obtained through decoding is the YUV data.

In actual application, the GOP decoder 1 may obtain YUV data of each video frame through decoding, and store the YUV data of the video frame in a cache space 1. Correspondingly, a GOP decoder 2 has a corresponding cache space 2 storing YUV data of a video frame obtained by the GOP decoder 2 through decoding. When the GOP decoder 2 needs to perform decoding, the GOP decoder 2 may store YUV data of a video frame in the cache space 2 each time the GOP decoder 2 obtains the YUV data of the video frame through decoding.

S317: The rendering thread searches, based on the timestamp t1 in the received rendering request, for the GOP decoder 1 corresponding to the video frame of the timestamp t1.

In actual application, the rendering thread sends a query request to each GOP decoder in a polling manner, where the query request carries the timestamp t1; and determines, based on a query result sent by the decoder based on the query request, the GOP decoder corresponding to the video frame of the timestamp t1.

The rendering thread may alternatively search, in the polling manner, cache spaces corresponding to various GOP decoders for the video frame at the moment t1 until the video frame of the moment t1 is found from a cache space, to determine the GOP decoder corresponding to the video frame of the timestamp t1.

In the following, an example in which the rendering thread sends the query request to the GOP decoder in the polling manner is used. In this embodiment of this application, after the rendering thread receives the rendering request:

The rendering thread first sends the query request (carrying t1) to the GOP decoder 1; and the GOP decoder 1 queries the cache space 1 to determine that there is no video frame at the moment t1, and sends, to the rendering thread, information indicating that there is no video frame at the moment t1. In actual application, if the GOP decoder 1 is not the decoder decoding the video frame of the timestamp t1, the cache space 1 does not have the video frame at the moment t1, and the GOP decoder 1 sends, to the rendering thread, the information indicating that there is no video frame of the timestamp t1. If the GOP decoder 1 is the decoder decoding the video frame of the timestamp t1, but the video frame of t1 has not been obtained through decoding in the decoding sequence, the cache space 1 does not have the video frame at the moment t1 either, and the GOP decoder 1 sends, to the rendering thread, the information indicating that there is no video frame of the timestamp t1. When decoding the video frames in the video frame group, the GOP decoder performs decoding in the decoding sequence of the video frames. When the GOP decoder 1 receives the query request, it is possible that the decoder has not decoded the video frame at the moment t1. Therefore, when it is learned by searching the cache space 1 that there is no video frame at the moment t1, the information indicating that there is no video frame of the timestamp t1 also needs to be sent to the rendering thread. If receiving the information that is sent by the GOP decoder 1 and that indicates that there is no video frame of the timestamp t1, the rendering thread sends the query request (carrying t1) to the GOP decoder 2. The GOP decoder 2 queries the cache space 2 and determines that there is no video frame at the moment t1, and sends, to the rendering thread, the information indicating that there is no video frame at the moment t1. Similarly, if the GOP decoder 2 is not the decoder decoding the video frame of the timestamp t1, the cache space 2 does not have the video frame at the moment t1, and the GOP decoder 2 sends, to the rendering thread, the information indicating that there is no video frame of the timestamp t1. If the GOP decoder 2 is the decoder decoding the video frame of the timestamp t1, but the video frame of t1 has not been obtained through decoding, the cache space 2 does not have the video frame at the moment t1 either, and the GOP decoder 2 sends, to the rendering thread, the information indicating that there is no video frame of the timestamp t1.

If receiving the information that is sent by the GOP decoder 2 and that indicates that there is no video frame of the timestamp t1, the rendering thread continues to send the query request (carrying t1) to the GOP decoder 1.

Such a polling manner is used until the rendering thread receives information that is sent by any decoder and that indicates that there is a video frame at the moment t1. In this embodiment of this application, an example in which the rendering thread receives the information that is sent by the GOP decoder 1 and that indicates that there is a video frame at the moment t1 is used. The rendering thread may determine that the decoder decoding the video frame of the timestamp t1 is the GOP decoder 1.

S318: The rendering thread obtains YUV data at the moment t1 from the cache (the cache space 1) of the GOP decoder 1 based on the determined GOP decoder 1.

S319: The rendering thread renders the obtained YUV data to obtain a video frame picture obtained through rendering at the moment t1.

S320: The rendering thread sends, to the gallery application, the video frame picture corresponding to the moment t1.

S321: The gallery application displays the video frame picture at the moment t1 of the video A in the video play area, and simultaneously updates the position of the progress display frame, so that a moment corresponding to a progress indication line is consistent with a timestamp of the received video picture.

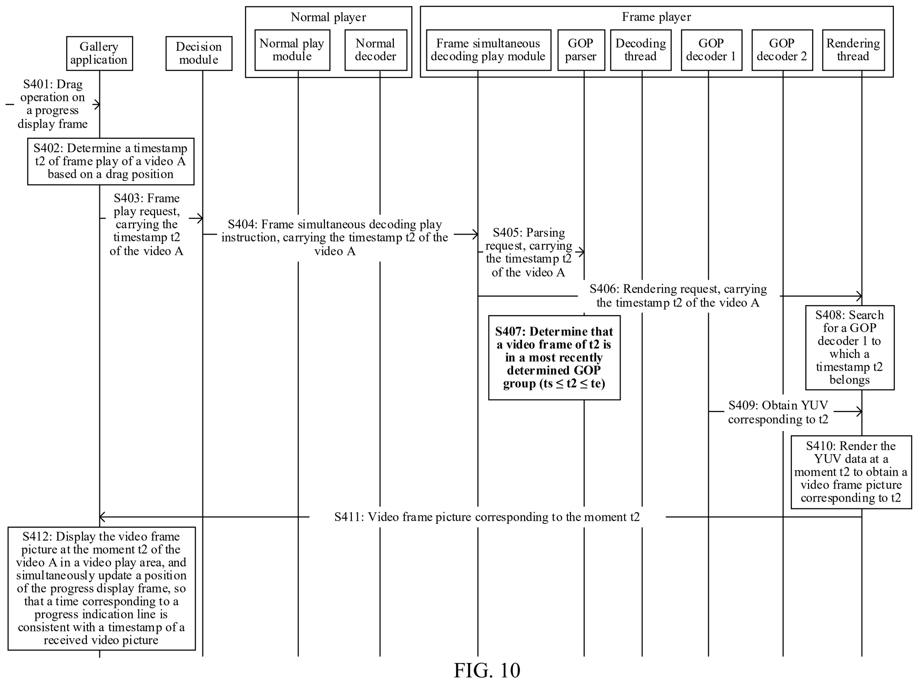

In the process of dragging the progress display frame by the user, the contact point position, detected by the electronic device, of a finger of the user may change. Correspondingly, a position relationship between the progress indication line and the progress display frame also changes, and the moment corresponding to the progress indication line also changes. If moments corresponding to two detected consecutive contact point positions are t1 and t2, for a process of displaying the video frame at t2 by the electronic device, refer to the frame play process shown in FIG. 10. A GOP group in which the video frame at the moment t2 is located is the same as a GOP group in which the video frame at the moment t1 is located.

S401: A gallery application receives a drag operation performed on a progress display frame.

It should be noted that the drag operation in S401 and step S301 is the same continuous operation, to be specific, the drag operation of the user is not released between step S401 and step S301, except that the moment corresponding to the progress indication line changes due to the drag operation.

S402: The gallery application determines a timestamp t2 of frame play of a video A based on a drag position.

S403: The gallery application sends a frame play request to a decision module in a case that it is determined that the video A is not played in a normal mode, where the frame play request carries the timestamp t2 of the video A.

In this embodiment of this application, the gallery application needs to send a normal play pause instruction and the frame play request to the decision module in a case that the video A is played in the normal mode. For details, refer to S303 shown in FIG. 7.

S404: The decision module sends a frame simultaneous decoding play instruction to a frame simultaneous decoding play module after receiving the frame play request, where the instruction carries the timestamp t2 of the video A.

S405: The frame simultaneous decoding play module sends a parsing request to a GOP parser after receiving a frame play instruction, where the parsing request carries the timestamp t2 of the video A.

S406: The frame simultaneous decoding play module sends a rendering request to a rendering thread after receiving the frame play instruction, where the rendering request carries the timestamp t2 of the video A.

S407: After receiving the parsing request, the GOP parser determines that a video frame corresponding to the timestamp t2 in the parsing request is in a most recently determined GOP group.

In this application, the timestamp ts of the first video frame and the timestamp te of the last video frame in the GOP group in which the previously obtained moment t1 is located have been recorded in S311. It may be determined whether t2 is greater than or equal to ts and is less than or equal to te. If t2 is greater than or equal to ts and is less than or equal to te, it indicates that the video frame corresponding to t2 is in the newest GOP group. If t2 is less than ts or greater than te, it indicates that the video frame corresponding to t2 is not in the newest GOP group.

After determining that the video frame of the timestamp t2 is in the most recently determined GOP group, the GOP parser no longer parses the video A, and no longer sends a decoding instruction to a decoding thread. Because the GOP group in which the video frame of the timestamp t2 is located has been obtained through parsing before, the decoder also starts to decode the GOP group in which the video frame of t2 is located in sequence.

S408: The rendering thread searches, based on the timestamp t2 in the received rendering request, for a GOP decoder 1 corresponding to the timestamp t2.

A process of determining the GOP decoder corresponding to the timestamp t2 by the rendering thread is the same as the process of determining the GOP decoder corresponding to the timestamp t1.

It should be noted that in the sequence diagram shown in FIG. 7, in step S315, the video frame decoded by the GOP decoder 1 is a video frame in the GOP group in which the video frame of t1 is located, and the video frame of t2 is also in the GOP group. Therefore, in step S315, the video frame corresponding to t2 is also obtained through decoding.

During specific implementation, when the rendering thread queries whether the GOP decoder 1 has YUV data corresponding to the timestamp t2, it is possible that the GOP decoder 1 has obtained, through decoding, the YUV data corresponding to t2, and it is also possible that the GOP decoder 1 has not obtained, through decoding, the YUV data corresponding to t2.

S409: The rendering thread obtains, from the GOP decoder 1, the YUV data corresponding to t2.

S410: The rendering thread renders the obtained YUV data at the moment t2 to obtain a corresponding video frame picture.

S411: The rendering thread sends, to the gallery application, the video frame picture corresponding to the moment t2.

S412: After receiving the video frame picture corresponding to the moment t2 sent by the rendering thread, the gallery application displays the video frame picture at the moment t2 of the video A in the video play area, and simultaneously updates the position of the progress display frame, so that a time corresponding to a progress indication line is consistent with a timestamp of the received video picture.

Certainly, during specific implementation, if the video frame of t2 and the video frame of t1 do not belong to a same group of video frames, the parsing, decoding, and rendering procedure of the video frame of t1 in FIG. 9A and FIG. 9B continues to be performed.

In addition, when the decoding thread determines to use the GOP decoder for decoding:
the decoding thread may first query the GOP decoder 1; and
if the GOP decoder 1 is in an idle state, decoding is performed by using the GOP decoder 1;
if the GOP decoder 1 is in a use state, the GOP decoder 2 is queried; or
if the GOP decoder 2 is in an idle state, decoding is performed by using the GOP decoder 2.

Certainly, in actual application, to enable frame play smoother, more GOP decoders may be disposed. For example,
if the GOP decoder 2 is in the use state, a GOP decoder 3 is queried.
**...**

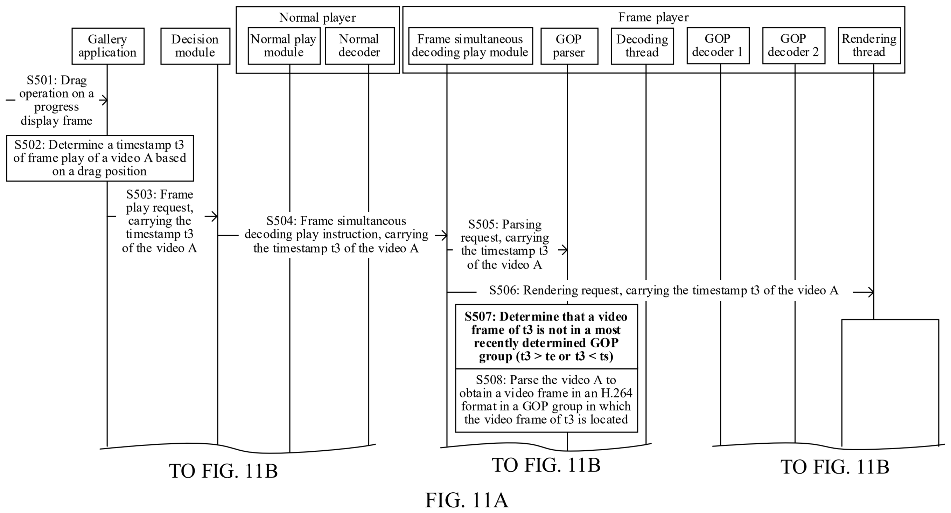

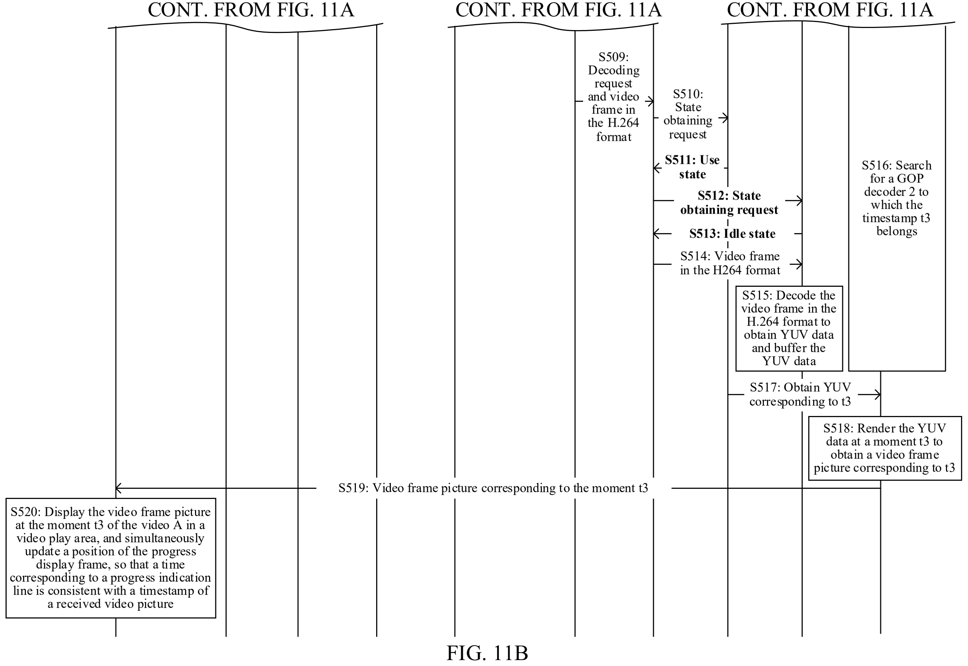

FIG. 11A and FIG. 11B are used as an example in embodiments of this application to describe that the parsing, decoding, and rendering procedure of the video frame of t1 in FIG. 9A and FIG. 9B continues to be performed when the video frame of t3 is not in the GOP group in which the video frame of t1 is located. In addition, in this example, when the GOP decoder 1 is not in the idle state, a video frame group in which a video frame of t3 is located is decoded by using the GOP decoder 2.

Certainly, in actual application, it does not indicate that decoding needs to be performed by using different GOP decoders when the video frame of t3 is not in the GOP group in which the video frame of t1 is located.

S501: A gallery application receives a drag operation on a progress display frame.

It should be noted that the drag operation in S501, S401, and S301 is the same continuous drag operation, to be specific, the drag operation of the user is not released between step S501 and step S301, except that the drag position changes.

S502: The gallery application determines a timestamp t3 of frame play of a video A based on a drag position.

S503: The gallery application sends a frame play request to a decision module in a case that it is determined that the video A is not played in a normal mode, where the frame play request carries the timestamp t3 of the video A.

S504: The decision module sends a frame simultaneous decoding play instruction to a frame simultaneous decoding play module after receiving the frame play request, where the instruction carries the timestamp t3 of the video A.

S505: The frame simultaneous decoding play module sends a parsing request to a GOP parser after receiving a frame play instruction, where the parsing request carries the timestamp t3 of the video A.

S506: The frame simultaneous decoding play module sends a rendering request to a rendering thread after receiving the frame play instruction, where the rendering request carries the timestamp t3 of the video A.

S507: After receiving the parsing request, the GOP parser determines that the video frame of the timestamp t3 in the parsing request is not in a most recently determined GOP group.

A relationship between t3 and ts may be compared with a relationship between t3 and te in the manner shown in step S407 in FIG. 10, to determine whether the video frame of t3 is in the most recently determined GOP group. If t3 is greater than or equal to ts and is less than or equal to te, it indicates that the video frame corresponding to t3 is in the newest GOP group. If t3 is less than ts or greater than te, it indicates that the video frame corresponding to t3 is not in the newest GOP group.

S508: After determining that the video frame of the timestamp t3 is not in the most recently determined GOP group, the GOP parser starts to parse the video A to obtain a video frame in an H.264 format in the GOP group in which the video frame of t3 is located.

S509: The GOP parser sends a decoding request to a GPO decoding thread.

During specific implementation, the GOP parser may buffer the video frame in the H.264 format obtained through decoding, where the decoding request carries a cache address; or the video frame in the H.264 format obtained through parsing may be directly sent.

S510: The decoding thread sends a state obtaining request to a GOP decoder 1.

S511: A decoding thread receives that a state of the GOP decoder 1 is a use state.

S512: The decoding thread sends the state obtaining request to a GOP decoder 2 in a case of determining that the GOP decoder 1 is in the use state.

S513: The decoding thread receives that a state of the GOP decoder 2 is an idle state.

S514: The decoding thread sends the video frame in the H.264 format or a cache address of the video frame in the H.264 format to the GOP decoder 2 in the idle state in a case of determining that the state of the GOP decoder 2 is the idle state.

S515: The GOP decoder 2 decodes the video frame in the H.264 format to obtain YUV data, and buffers the YUV data.

The video frames in the H.264 format that are obtained by the GOP decoder are all video frames in the GOP group in which the video frame of t3 is located, and need to be sequentially decoded in a decoding sequence until all the video frames in the GOP group are decoded. Data, obtained through decoding, of each video frame is the YUV data.

S516: The rendering thread searches, based on the timestamp t3 in the received rendering request, for the GOP decoder 2 corresponding to the video frame of the timestamp t3.

A method for determining the decoder of the video frame of t3 by the rendering thread is the same as the method for determining the decoder of the video frame of t1. Details are not described herein again.

S517: The rendering thread obtains YUV data at the moment t3 from the cache of the GOP decoder 2 based on the determined GOP decoder 2.

S518: The rendering thread renders the obtained YUV data to obtain a video frame picture obtained through rendering at the moment t3.

S519: The rendering thread sends, to the gallery application, the video frame picture corresponding to the moment t3.

S520: The gallery application displays the video frame picture at the moment t3 of the video A in the video play area, and simultaneously updates the position of the progress display frame, so that a time corresponding to a progress indication line is consistent with a timestamp of the received video picture.

In a specific implementation process, the interface shown in (e) in FIG. 2 may be a video frame play interface corresponding to the timestamp t3.

In addition, after the user ends dragging the progress display frame, in other words, after the user lifts the finger from the area of the progress display frame, the play process of the video A restores to the state before switching to frame play: normal play or paused play.

During specific implementation, in a first case, if the user drags the progress display frame when the video A is played in the normal mode, after the user lifts the finger from the area of the progress display frame, the play process of the video A switches from the frame play mode to the normal play mode, and play continues in the normal mode from the moment indicated by the progress indication line when the user lifts the finger from the progress display frame.

In a second case, if the user first pauses the normal play process of the video A and then drags the progress display frame in the paused state of the video A when the video A is played in the normal mode, after the user lifts the finger from the area of the progress display frame, the play process of the video A switches from the frame play to the paused state. After the user taps a normal play control in the video play area in the interface, play continues in the normal mode from the moment (the moment indicated by the progress indication line when the user lifts the finger from the area of the progress display frame) indicated by the progress indication line.

The first case is used as an example in embodiments of this application. The video A switches from the frame play to the normal play after the user lifts the finger from the area of the progress display frame at the moment t3 to release the progress display frame.

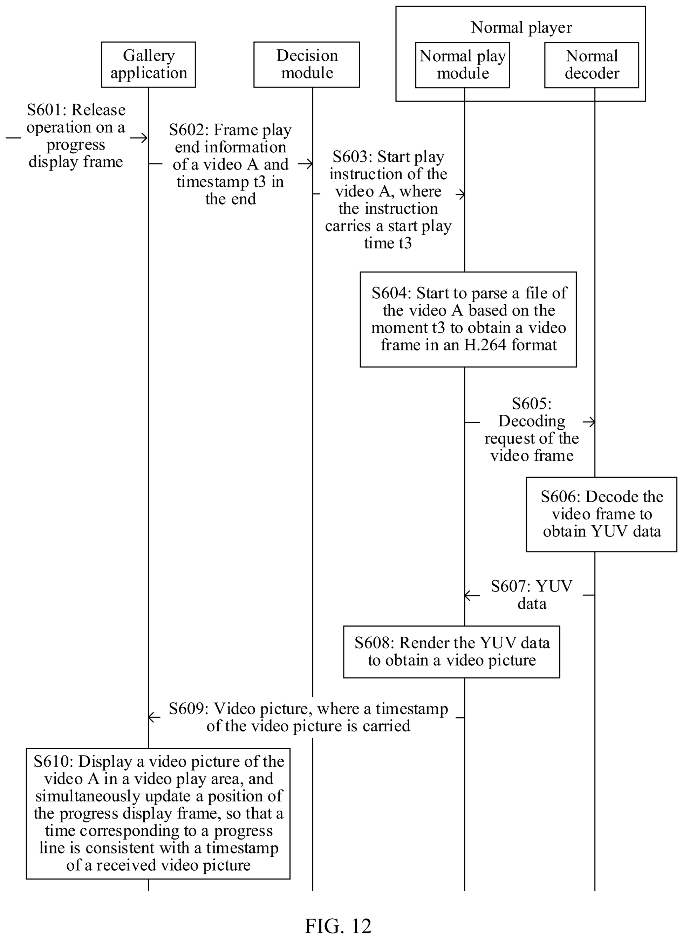

FIG. 12 is a sequence diagram of switching from frame play to normal play in a case that a moment corresponding to a progress indication line is a moment t3 when an operation is released on a progress display frame according to an embodiment of this application.

S601: A gallery application receives a release operation on the progress display frame.

In this embodiment of this application, the release operation (a user lifts a finger from a screen after the drag ends) in S601 and the foregoing drag operation are consecutive gesture operations, that is, the user drags the progress display frame with a finger and lifts the hand when a moment indicated by a progress indication line changes from t1 to t3. The lifting operation is the release operation on the progress display frame.

S602: The gallery application sends frame play end information of a video A and a timestamp t3 in the end to a decision module in response to the operation.

During specific implementation, a marker bit may be disposed in the gallery application or the decision module to mark whether the video A is in a normal play state or a paused play state before frame play. If the video A is in the paused state, a subsequent process of restoring to the normal play is no longer performed. If the video A is in a play state, because the decision module pauses the normal play when switching to the frame play (where the marker bit of the normal play paused when the frame play is switched to does not change), a play instruction needs to be sent to a normal player again, that is, a subsequent operation is performed.

S603: The decision module sends a start play instruction of the video A to a normal play module after receiving the frame play end information and the timestamp t3, where the instruction carries a start play time t3.

S604: After receiving the start play instruction of the video A and the timestamp t3, the normal play module starts to parse a file of the video A based on the moment t3 to obtain a video frame in an H.264 format.

After S604, the process of performing the normal play is similar to the step performed after S204 in FIG. 6, except that decoding starts from the video frame of the 0^{th} second in FIG. 6 and play starts from the video frame at the moment t3 after S604 in FIG. 10.

Certainly, in actual application, decoding may need to start from a key frame in a GOP group in which the moment t3 is located. Therefore, decoding may start from a previous key frame of the video frame at the moment t3.

S605: The normal play module sends a decoding request of the video frame to a normal decoder. For descriptions of the decoding request, refer to the descriptions in S205 in FIG. 6.

S606: The normal decoder decodes the video frame to obtain decoded video data: YUV data.

S607: The normal decoder sends the decoded YUV data to a normal player.

Similarly, the normal decoder may alternatively buffer the YUV data, and then send an address of the buffered YUV data to the normal player. A specific transmission manner is not limited in this embodiment of this application.

S608: After receiving the decoded YUV data, the normal player renders the YUV data to obtain a video picture.

S609: The normal player sends the video picture obtained through rendering to the gallery application, where a timestamp of the video picture is carried.

S610: After receiving the video picture, the gallery application displays the received video picture in the video play area, and simultaneously updates a position of a progress display frame in the progress display area, so that a moment corresponding to a progress indication line is consistent with a timestamp of the received video picture.

In the foregoing manner, the normal play and the frame play of the video A may be implemented, and the normal play and the frame play may be switched between each other. In addition, two additionally configured decoders are used for decoding in the frame play process. Therefore, decoding efficiency during frame play is improved, so that the video picture in the frame play process is relatively smooth.

As described above, an embodiment of this application further provides another video: a Magic Take video. This corresponds to the play process of the Magic Take video shown in FIG. 3. When displaying the video play interface shown in (b) in FIG. 3, the electronic device also needs to create a thumbnail parsing module, so that when a progress display frame corresponding to the first frame and the middle frame is switched to a progress display frame corresponding to a plurality of thumbnails, a quantity of thumbnails matching video duration may be obtained through parsing based on the video duration to serve as the progress display frame.

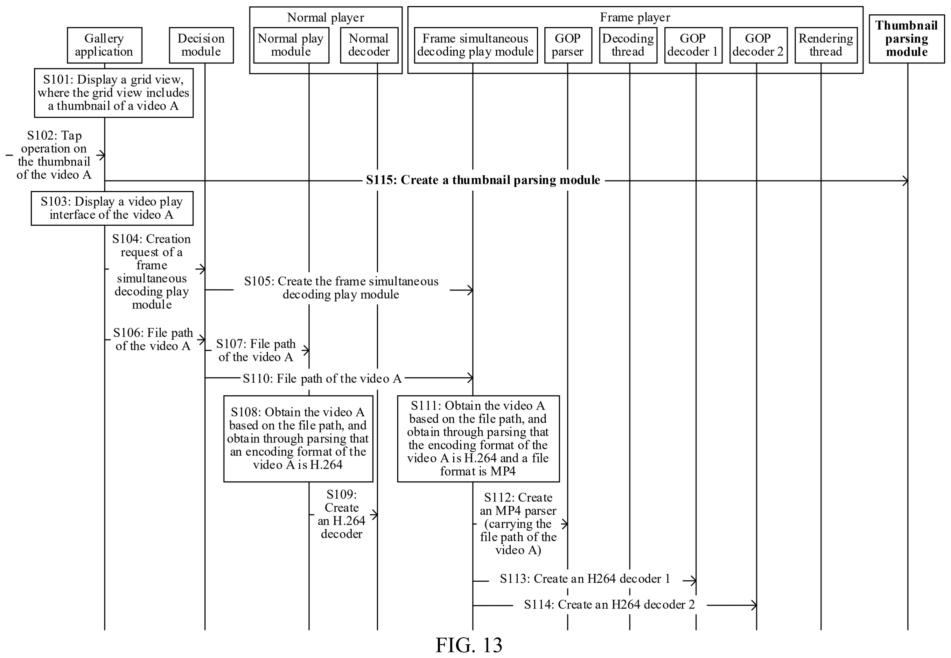

Refer to FIG. 13. Based on the sequence diagram shown in FIG. 5, after step S103, the method further includes the following step:

S115: The gallery application creates a thumbnail parsing module after receiving the tap operation on the thumbnail of the video A.

Certainly, during specific implementation, there is no strict sequence between the step of creating the frame simultaneous decoding play module and the step of creating the thumbnail parsing module after S103. Similarly, after receiving the tap operation on the thumbnail of the video A, the gallery application on one hand performs the procedure of displaying the video play interface of the video A, and on the other hand performs the procedure of creating the thumbnail parsing module, and further performs the procedure of creating the frame simultaneous decoding play module. There is no strict sequence between the three procedures.

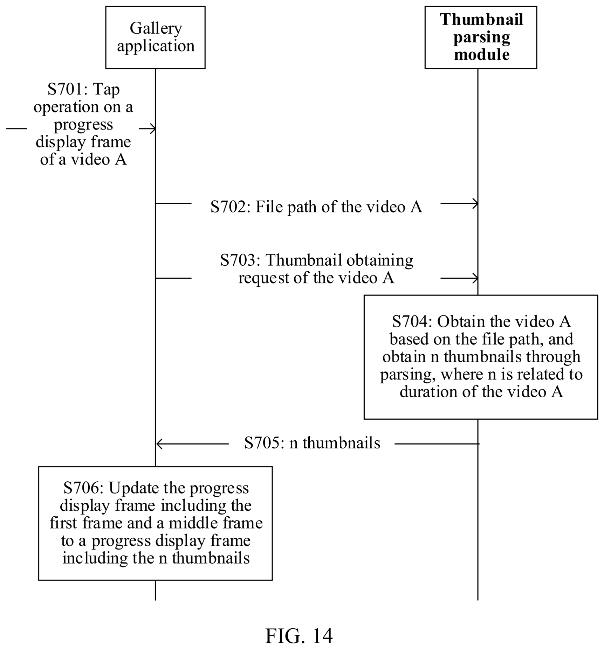

Refer to FIG. 14. When a progress display frame displayed in a progress display area in a video play interface is the first frame and the middle frame, a user may trigger, through a tap operation or another operation, the progress display frame to be updated to a plurality of thumbnails whose quantity matches video duration. For ease of description, only a gallery application and a thumbnail parsing module that is configured to obtain the plurality of thumbnails whose quantity matches the video duration are displayed, where the gallery application and the thumbnail parsing module interact with each other.

S701: A gallery application receives a tap operation on a progress display frame of a video A.

The tap operation is performed on the progress display frame displayed as the first frame and the middle frame. For example, the tap operation may be the tap operation on the progress display frame shown in (b) in FIG. 3, and the progress display frame is the first frame and the middle frame.

S702: After receiving the tap operation, the gallery application sends a file path of the video A to a thumbnail parsing module to trigger the thumbnail parsing module to parse the video A to obtain thumbnails whose quantity matches duration of the video A.

S703: The gallery application sends a thumbnail obtaining request of the video A to the thumbnail parsing module.

S703 and S702 may be performed as one step, or may be performed as two independent steps. This is not limited in this embodiment of this application.

S704: After receiving the thumbnail obtaining request of the video A, the thumbnail parsing module obtains the video A based on the file path of the video A, and parses the video A to obtain n thumbnails, where n is related to the duration of the video A. Longer duration of the video A indicates a larger n.

S705: The thumbnail parsing module sends the n thumbnails obtained through parsing to the gallery application.

S706: After receiving the n thumbnails, the gallery application updates the progress display frame including the first frame and the middle frame to a progress display frame including the n thumbnails.

After S706, an electronic device displays the interface shown in (c) in FIG. 3. The progress display frame in the interface is updated to thumbnails of four video frames.

A display manner of the progress display frame may be switched in the Magic Take video play interface by using the sequence diagram shown in FIG. 14. For a normal play process and a frame play process of a Magic Take video, refer to the foregoing normal play process and the foregoing frame play process of a video.

The foregoing describes the normal play process and the frame play process of the video A. As described above, a parser, a decoder, and the like need to be created before the video play interface of the video A is opened. Similarly, the created parser, decoder, and the like need to be destroyed when the video play interface of the video A is exited.

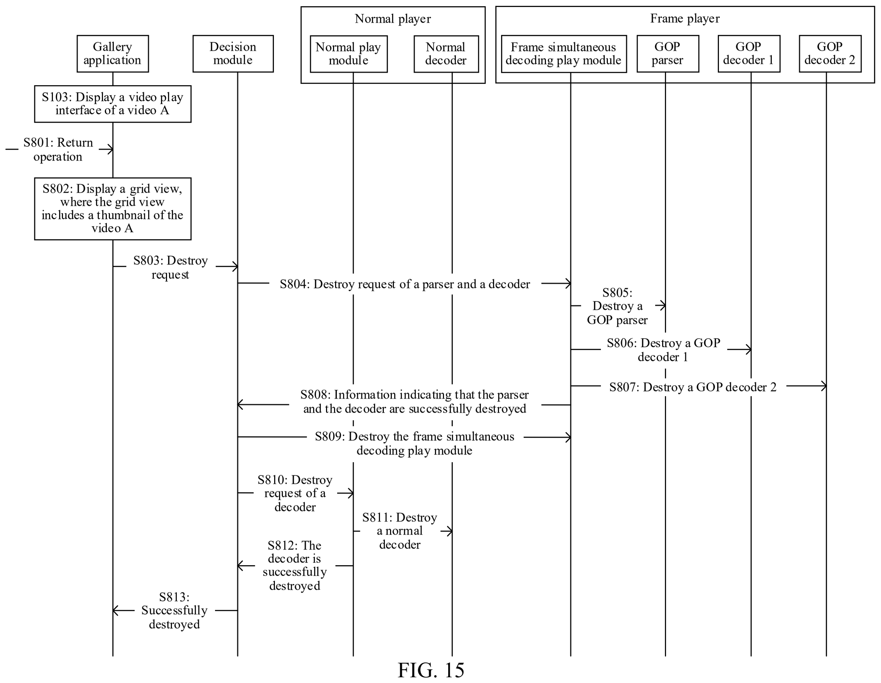

FIG. 15 is a sequence diagram of destroying a parser and a decoder when a video play interface of a video A is exited according to an embodiment of this application.

S801: A gallery application receives a return operation in a case of receiving the video play interface of the video A.

In this embodiment of this application, the return operation may be an operation of swiping from the rightmost to the left of a screen on the interface. The operation may trigger the gallery application to return to the grid view interface shown in (a) in FIG. 2.

S802: The gallery application displays a grid view after receiving the return operation, where an interface in which the grid view is located is an interface before the video play interface of the video A shown in (b) in FIG. 2 is entered, and the grid view includes a thumbnail of the video A.

S803: The gallery application sends a destroy request to a decision module after receiving the return operation, where the destroy request is used to destroy various modules created when the video play interface of the video A is entered.

It should be noted that there is no strict sequence between S802 and S803. S802 and S803 may be two parallel steps, or one step may be performed before the other step.

After receiving the destroy request, the decision module on one hand destroys related modules (a GOP parser and a GOP decoder) in a frame player, and on the other hand destroys a related module (a normal decoder) in a normal player. The destroy operations on the two aspects may be performed simultaneously, or the destroy operation on one aspect may be performed before the destroy operation on the other aspect.

The process of destroying the related modules (the GOP parser and the GOP decoder) in the frame player is described by using S804 to S809.

S804: The decision module sends the destroy request of the parser and the decoder to a frame simultaneous decoding play module after receiving the destroy request.

S805: The frame simultaneous decoding play module destroys the GOP parser after receiving the destroy request of the parser and the decoder.

S806: The frame simultaneous decoding play module destroys a GOP decoder 1 after receiving the destroy request of the parser and the decoder.

S807: The frame simultaneous decoding play module destroys a GOP decoder 2 after receiving the destroy request of the parser and the decoder.

There is no strict sequence between the steps of destroying the GOP parser and the GOP decoder.

S808: After destroying the GOP parser, the GOP decoder 1, and the GOP decoder 2, the frame simultaneous decoding play module sends, to the decision module, information indicating that the parser and the decoder are successfully destroyed.

S809: The decision module destroys the frame simultaneous decoding play module after receiving the information that indicates that the parser and the decoder are successfully destroyed and that is sent by the frame simultaneous decoding play module.

The process of destroying the related module (the decoder) in the normal player is described by using S810 to S812.

S810: The decision module sends the destroy request of the decoder to a normal play module after receiving the destroy request.

S811: The normal play module destroys the normal decoder after receiving the destroy request of the decoder.

S812: After destroying the normal decoder, the normal play module sends, to the decision module, information indicating that the decoder is successfully destroyed.

S813: The decision module sends destroy success information to the gallery application after destroying the frame simultaneous decoding play module and receiving the information that indicates that the decoder is successfully destroyed and that is sent by the normal play module.

Implementation of this embodiment of this application is not limited to the scenario shown in FIG. 2 to FIG. 4. When a video is played via the gallery application, frame play of the video may be implemented by using the frame play method provided in embodiments of this application, to improve smoothness of the frame play. Certainly, when played via another video play application, the video may also be played by using the frame play method provided in embodiments of this application.

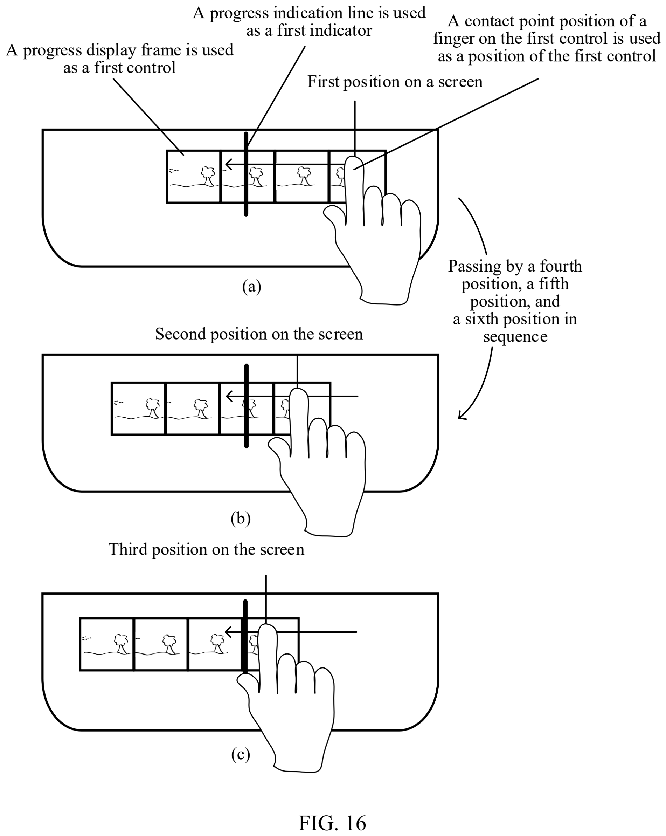

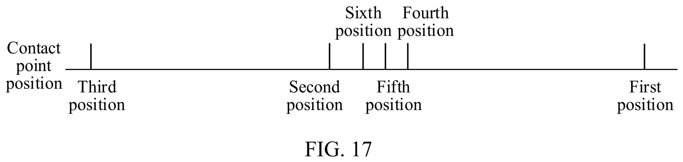

FIG. 16 is a diagram of a drag operation on a progress display frame according to an embodiment of this application. FIG. 17 is a diagram of a frame play process corresponding to the drag operation shown in FIG. 16. The video play method provided in embodiments of this application includes:
displaying a first interface, where the first interface includes a first area and a first control, and the first area includes a first video frame in a first video; and
in a case that a drag operation on the first control is received,
in response to the drag operation, moving the first control from a first position to a second position; and
in a processing of moving the first control from the first position to the second position along a first trajectory, decoding a first segment of video frames in the first video by using a first decoder, decoding a second segment of video frames in the first video by using a second decoder, displaying a video frame in the first segment of decoded video frames in the first area, and displaying a video frame in the second segment of decoded video frames in the first area, where the first segment of video frames and the second segment of video frames are two consecutive segments of video frames in the first video.

In this embodiment of this application, the first video may be the video A in the foregoing example, and the first video frame may be any frame in the first video, for example, may be the first video frame. The first interface may be the video play interface in the foregoing embodiment, and the first area may be the video play area in the foregoing embodiment. Certainly, the first interface further includes a second area, that is, a progress display area. In the foregoing example, the progress display area and the video play area are two areas that do not overlap each other. In actual application, the progress display area may alternatively be located in the video play area.

Refer to FIG. 16. The first control may be the progress display frame in the foregoing embodiment. A position of the first control may be any point on the progress display frame, and may be a position reference point. A position of the first control is a position of the position reference point. Certainly, the position reference point may alternatively be a position that is on the progress display frame and that corresponds to a contact point position of a user. The first trajectory may be a straight trajectory between the first position and the second position.

As described above, different positions of the progress display frame indicate different play progresses. The position of the progress indication line remains unchanged. By dragging the progress display frame, the progress indication line is enabled to be located on different positions on the progress display frame. Different positions of the progress indication line on the progress display frame indicate different play progresses. Therefore, in a case that the position of the progress indication line remains unchanged, in a drag process, different positions of the progress display frame may also correspond to different play progresses.

If the play progress is displayed in a form of a progress bar, the first control is a control that may be dragged on the progress bar, and the position of the progress bar remains unchanged. Similarly, different positions on the progress bar indicate different play progresses.

In the process in which the user drags the progress display frame, so that the position of the progress display frame changes from the first position to the third position along the first trajectory, a fourth position, a fifth position, a sixth position, and the second position are passed by sequentially.

Refer to FIG. 17. Contact point positions of the finger of the user are sequentially the first position, the fourth position, the fifth position, the sixth position, the second position, and the third position from right to left.

If video frames are sorted from left to right in a play sequence, in the process in which the contact point position of the finger of the user is dragged from right to left, corresponding video frames are displayed from left to right. For video frames correspondingly displayed when the first control are at different positions, refer to FIG. 17.

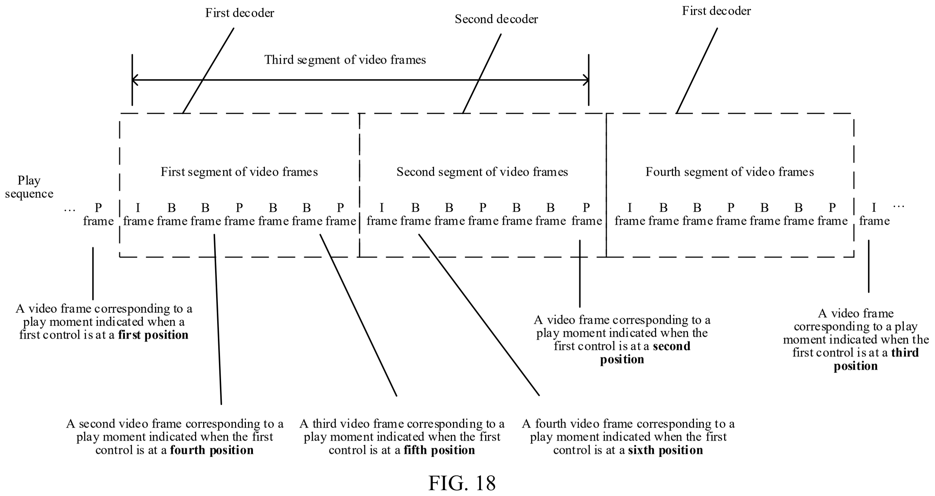

Refer to FIG. 18. Each segment of video frames (corresponding to one GOP group or one video frame group in the foregoing example) include an I frame, and a P frame and a B frame that are encoded based on the I frame.

In an embodiment of this application, in actual application, different segments of video frames may be alternately decoded by using a first decoder and a second decoder. For example, a first segment of video frames, a second segment of video frames, and a fourth segment of video frames are three consecutive segments of video frames. In a case that the first segment of video frames are decoded by using the first decoder, the second segment of video frames are decoded by using the second decoder, and the fourth segment of video frames are decoded by using the first decoder.

In another embodiment of this application, a decoder in an idle state may alternatively be selected for decoding based on a state of the decoder. For example, each video frame in a first frame group is decoded by using the first decoder in the idle state. When the drag operation enables the position of the first control to correspond to the second segment of video frames, the first decoder may still be decoding a video frame in the first segment of video frames. Therefore, each video frame in the second segment of video frames may be decoded by using the second decoder in the idle state. When the drag operation enables the position of the first control to correspond to the third segment of video frames, the second decoder may still be decoding a video frame in the second segment of video frames, but the first decoder has finished decoding the video frames in the first segment of video frames. Therefore, each video frame in the third segment of video frames may be decoded by using the first decoder in the idle state.

In this embodiment, at least two decoders may be used specially for a frame play scenario. In the frame play scenario, a currently to-be-displayed video frame is decoded by using a decoder currently in the idle state (or by alternately using decoders for decoding), to improve a decoding speed of the video frame. After the decoding speed of the video frame is improved, the video frame is displayed relatively smoothly. The method can improve smoothness of video pictures in the frame play scenario.

In this embodiment of this application, another video frame may further exist before the first segment of video frames in the first video, and another video frame may also exist after the fourth segment of video frames.

When the first control is at the first position, it indicates that a video frame played corresponding to the moment may be an I frame in the first segment of video frames, or may be a video frame before an I frame in the first segment of video frames.

When the first control is at the second position, it indicates that a video frame played corresponding to the moment may be the last video frame in the second segment of video frames.

When the first control is at the third position, it indicates that a video frame played corresponding to the moment may be the last video frame in the third segment of video frames or a video frame after the last video frame in the third segment of video frames.

The user may drag the first control from the first position to the third position. In the drag process, the first control specifically passes by the fourth position, the fifth position, the sixth position, and the second position from the first position, and arrives at the third position. Certainly, another position is further passed by. Examples are not listed one by one.

The following describes the drag process from the first position to the second position.

When the first control is dragged to the fourth position, it is determined that a corresponding play moment is a first moment. In this case, the previous decoded video frame group is not the first segment of video frames. Therefore, the first video is parsed to obtain the first segment of video frames in which a video frame corresponding to the first moment is located. Video frames in the first segment of video frames are sequentially decoded in a decoding sequence of the video frames in the first segment of video frames by using the first decoder. After a second video frame corresponding to the first moment in the first segment of video frames is decoded, the second video frame is displayed in the first area.

When the first control is dragged to the fifth position, it is determined that a corresponding play moment is a second moment. In this case, the previous decoded video frame group is the first segment of video frames, and a video frame corresponding to the second moment is in the first segment of video frames. Because the first decoder decodes each video frame in the first segment of video frames, a third video frame corresponding to the second moment may be obtained from the first decoder. After the third video frame is obtained from the first decoder, the third video frame is displayed in the first area.

When the first control is dragged to the sixth position, it is determined that a corresponding play moment is a third moment. In this case, the previous decoded video frame group is the first segment of video frames, and a video frame corresponding to a third moment is not in the first segment of video frames. The first video is parsed to obtain the second segment of video frames in which a fourth video frame corresponding to the third moment is located. Video frames in the second segment of video frames are sequentially decoded in a decoding sequence of the video frames in the second segment of video frames by using the second decoder. After the fourth video frame in the second segment of video frames is decoded, the fourth video frame is displayed in the first area.

It should be noted that the second video frame may be a B frame in the example, or may not be a B frame in the example; and the third video frame may be a B frame in the example, or may not be a B frame in the example. However, a play sequence of the second video frame is before that of the third video frame. Similarly, the fourth video frame may be a B frame in the figure, or may not be a B frame in the example.

Because the foregoing drag process is a frame play process, a video frame displayed in the drag process is related to a detected contact point position. Therefore, some video frames or all video frames in the first segment of video frames are displayed in the drag process. Similarly, some video frames or all video frames in the second segment of video frames are displayed in the drag process.

In addition, in this embodiment of this application, in the process of playing the first video in the normal play manner, a third segment of video frames including the first segment of video frames and the second segment of video frames may also be displayed. The position of the first control is also moved in the display process. Besides, because the entire first video may be played in the normal play process, video frames played in the normal play manner may further include another segment of video frames. Certainly, some video frames in the first video may alternatively be played in the normal play process.

It should be understood that a sequence number of each step in the foregoing embodiments does not mean an execution sequence. The execution sequence of each process should be determined based on a function and internal logic of the process, and shall not constitute any limitation on the implementation process of embodiments of this application.

An embodiment of this application further provides a computer-readable storage medium. The computer-readable storage medium stores a computer program. When the computer program runs on an electronic device, the steps in the foregoing method embodiments may be implemented.

An embodiment of this application further provides a computer program product. When the computer program product runs on an electronic device or a wireless router, the electronic device is enabled to implement the steps in the foregoing method embodiments.

When an integrated unit is implemented in a form of a software functional unit and sold or used as an independent product, the integrated unit may be stored in a computer-readable storage medium. Based on such an understanding, in this application, all or some procedures of the methods in the foregoing embodiments may be implemented by a computer program instructing related hardware. The computer program may be stored in a computer-readable storage medium. When the computer program is executed by a processor, the steps in the foregoing method embodiments may be implemented. The computer program includes computer program code. The computer program code may be in a source code form, an object code form, an executable file form, some intermediate forms, or the like. The computer-readable medium may at least include: any entity or apparatus that can add the computer program code to a first device, a recording medium, a computer memory, a read-only memory (ROM, Read-Only Memory), a random access memory (RAM, Random Access Memory), an electric carrier signal, a telecommunication signal, and a software distribution medium, for example, a USB flash drive, a removable hard disk, a magnetic disk, or an optical disc. In some jurisdictions, under legislation and patent practice, a computer-readable medium cannot be an electrical carrier signal or a telecommunications signal.

An embodiment of this application further provides a chip. The chip includes a processor. The processor is coupled to a memory. The processor invokes a computer program stored in the memory, to implement the steps in any method embodiment of this application. The chip may be a single chip or a chip module including a plurality of chips.

In the foregoing embodiments, the descriptions of the embodiments have respective focuses. For a part that is not detailed or described in an embodiment, refer to related descriptions in other embodiments.

A person of ordinary skill in the art may be aware that the units and method steps of each example described with reference to embodiments disclosed herein can be implemented in electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that such an implementation goes beyond the scope of this application.

The foregoing embodiments are merely intended to describe the technical solutions of this application, rather than limit this application. Although this application is described in detail with reference to the foregoing embodiments, a person of ordinary skill in the art should understand that modifications can still be made to the technical solutions described in the foregoing embodiments or equivalent replacements can be made to some technical features thereof, without departing from the spirit and scope of the technical solutions of the embodiments of this application. All these modifications and equivalent replacements shall fall within the protection scope of this application.

## Claims

1. A video play method, applied to an electronic device, wherein the method comprises:
displaying a first interface, wherein the first interface comprises a first area and a first control, and the first area comprises a first video frame in a first video; and
in a case that a drag operation on the first control is received,
in response to the drag operation, moving the first control from a first position to a second position along a first trajectory; and
in a processing of moving the first control from the first position to the second position along the first trajectory, decoding a first segment of video frames in the first video by using a first decoder, decoding a second segment of video frames in the first video by using a second decoder, displaying a video frame in the first segment of decoded video frames in the first area, and displaying a video frame in the second segment of decoded video frames in the first area, wherein the first segment of video frames and the second segment of video frames are two consecutive segments of video frames in the first video.

2. The method according to claim 1, wherein a play control is displayed on the first video frame in the first interface, and the method further comprises:
in a case that an operation performed on the play control is received,
in response to the operation performed on the play control, decoding a video frame in the first video by using a third decoder, and displaying the decoded video frame in the first video in the first area; and
in a process of displaying a third segment of decoded video frames in the first video in the first area, moving the first control from the first position to the second position along the first trajectory, wherein the third segment of video frames comprise the first segment of video frames and the second segment of video frames.

3. The method according to claim 1 or 2, wherein the displaying a video frame in the first segment of decoded video frames in the first area, and the displaying a video frame in the second segment of decoded video frames in the first area are specifically:
displaying the video frame in the second segment of decoded video frames in the first area after displaying the video frame in the first segment of decoded video frames.

4. The method according to claim 3, further comprising:
in response to the drag operation, continuing to move the first control from the second position to a third position; and
in a process of moving the first control from the second position to the third position, decoding a fourth segment of video frames in the first video by using the first decoder, and displaying a video frame in the fourth segment of decoded video frames in the first area, wherein the fourth segment of video frames and the second segment of video frames are two consecutive segments of video frames in the first video.

5. The method according to any one of claims 1 to 4, wherein the decoding a first segment of video frames in the first video by using a first decoder comprises:
decoding the first segment of video frames in the first video by using the first decoder in a case that a state of the first decoder is an idle state.

6. The method according to claim 5, wherein the decoding the first segment of video frames in the first video by using the first decoder in a case that the state of the first decoder is the idle state comprises:
obtaining the state of the first decoder;
determining that the state of the first decoder is the idle state; and
decoding the first segment of video frames in the first video by using the first decoder in the idle state.

7. The method according to any one of claims 1 to 6, wherein the decoding a second segment of video frames in the first video by using a second decoder comprises:
decoding the second segment of video frames in the first video by using the second decoder in the idle state in a case that the state of the first decoder is a use state and a state of the second decoder is the idle state.

8. The method according to claim 7, wherein the decoding the second segment of video frames in the first video by using the second decoder in the idle state in a case that the state of the first decoder is the use state and the state of the second decoder is the idle state comprises:
obtaining the state of the first decoder;
determining that the state of the first decoder is the use state;
obtaining the state of the second decoder in a case that it is determined that the state of the first decoder is the use state;
determining that the state of the second decoder is the idle state; and
decoding the second segment of video frames in the first video by using the second decoder in the idle state.

9. The method according to any one of claims 1 to 8, wherein in the process of moving the first control from the first position to the second position along the first trajectory, the method further comprises:
displaying a second video frame in the first video in the first area when the first control is moved to a fourth position, wherein a video frame corresponding to a play progress of the first video is the second video frame when the first control is at the fourth position, and the fourth position is on the first trajectory and is between the first position and the second position.

10. The method according to claim 9, wherein the first interface further comprises a first indicator, and the first indicator is located above the first control and a position on a screen remains unchanged; and a video frame corresponding to a play progress indicated by the position of the first indicator on the first control is the second video frame when the first control is at the fourth position, and a position of the first control is a position of a point on the first control.

11. The method according to claim 9 or 10, wherein the play progress of the first video is a first moment when the first control is at the fourth position, and the displaying a second video frame in the first video in the first area when the first control is moved to a fourth position comprises:
when the first control is moved to the fourth position, parsing the first video to obtain the first segment of video frames on which a video frame corresponding to the first moment is located;
sequentially decoding video frames in the first segment of video frames in a decoding sequence of the video frames in the first segment of video frames by using the first decoder; and
displaying the second video frame in the first area after the second video frame that is in the first segment of video frames and that corresponds to the first moment is decoded.

12. The method according to claim 11, wherein in the process of moving the first control from the first position to the second position along the first trajectory, the method further comprises:
when the first control is moved from the fourth position to a fifth position, determining that the play progress of the first video is a second moment, wherein the fifth position is on the first trajectory and is between the fourth position and the second position;
if a video frame corresponding to the second moment is in the first segment of video frames, obtaining, from first cache space of the first decoder, a third video frame corresponding to the second moment; and
displaying the third video frame in the first area after the third video frame is obtained from the first decoder.

13. The method according to claim 11 or 12, wherein in the process of moving the first control from the first position to the second position along the first trajectory, the method further comprises:
when the first control is moved from the fourth position to a sixth position, determining that the play progress of the first video is a third moment, wherein the sixth position is on the first trajectory and is between the fourth position and the second position;
if a video frame corresponding to the third moment is not in the first segment of video frames, parsing the first video to obtain the second segment of video frames on which the fourth video frame corresponding to the third moment is located;
sequentially decoding video frames in the second segment of video frames in a decoding sequence of the video frames in the second segment of video frames by using the second decoder; and
displaying the fourth video frame in the first area after the fourth video frame in the second segment of video frames is decoded.

14. The method according to any one of claims 1 to 13, wherein video frames in the first video comprise a plurality of I frames, there are at least one P frame and at least one B frame between any two I frames, the first segment of video frames comprise an i^{th} I frame and a P frame and a B frame between the i^{th} I frame and an (i+1)^{th} I frame, the second segment of time frames comprise the (i+1)^{th} I frame and a P frame and a B frame between the (i+1)^{th} I frame and an (i+2)^{th} I frame, a timestamp of the i^{th} I frame is less than a timestamp of the (i+1)^{th} I frame, the timestamp of the (i+1)^{th} I frame is less than a timestamp of the (i+2)^{th} I frame, and i is a natural number greater than or equal to 1.

15. The method according to any one of claims 1 to 14, wherein the first interface further comprises a second area, and the first control is located in the second area and can be moved in the second area; and
the first area and the second area do not overlap, or the second area is in the first area.

16. The method according to any one of claims 2 to 15, wherein the displaying a video frame in the first segment of decoded video frames in the first area is specifically:
displaying some or all video frames in the first segment of decoded video frames in the first area;
the displaying a video frame in the second segment of decoded video frames in the first area is specifically:
displaying some or all video frames in the second segment of decoded video frames in the first area; and
the displaying the decoded video frame in the first video in the first area specifically comprises:
displaying some or all decoded video frames in the first video in the first area.

17. An electronic device, comprising one or more processors and one or more memories, wherein the one or more memories are coupled to the one or more processors, the one or more memories are configured to store a computer program, and when the one or more processors execute the computer program, the electronic device is enabled to perform the method according to any one of claims 1 to 16.

18. A chip system, wherein the chip system is applied to an electronic device, the chip system comprises one or more processors, and the processor is configured to invoke computer instructions, so that the electronic device performs the method according to any one of claims 1 to 16.

19. A computer-readable storage medium, comprising a computer program, wherein when the computer program is run on an electronic device, the electronic device is enabled to perform the method according to any one of claims 1 to 16.
